# EUROPEAN PATENT APPLICATION

(11) **EP 4 848 639 A1**
(43) Date of publication of application: **02.12.2026**
(21) Application number: 25179941.7
(22) Date of filing: 30.05.2025
(51) Int. Cl.: H04L 5/00, H04L 27/26

(54) **A NEW NON-ORTHOGONAL MULTIPLE ACCESS DESIGN LEVERAGING WAVEFORM COEXISTENCE OF OFDM AND AFDM**

(71) Applicant: Vestel Elektronik Sanayi ve Ticaret A.S., 45030 Manisa (TR)
(72) Inventor: ABELA, Kenza, 34810 Istanbul (TR); ABIDRABBU, Shaima, 34810 Istanbul (TR); AMMAR BOUDJELAL, Ayoub, 45030 Manisa (TR); ARSLAN, Hüseyin, 34810 Istanbul (TR)
(74) Representative: Grünecker Patent- und Rechtsanwälte PartG mbB

(57) **Abstract**

Techniques and methods are described to perform wireless transmission and reception of data, which are split into common data and private data and transmitted over a wireless channel. The common data are transmitted using a first waveform that is an Affine Frequency Division Multiplexing, AFDM, waveform and the private data are transmitted using a second waveform that is an Orthogonal Frequency Division Multiplexing, OFDM, waveform different from the first waveform. Over the wireless channel, a signal is received that includes the common data and the private data. Using the first waveform and/or the second waveform, channel information of the wireless channel is obtained, and the common data and the private data are determined from the received signal, based on the channel information. By combining the common data and the private data, the data are obtained.

## Description

The present disclosure relates generally to wireless communication, and in particular to Non-Orthogonal Multiple Access employing waveform design.

### BACKGROUND

The emergence of the fifth generation (5G) of mobile communication marked a significant change in wireless networks, shifting focus towards supporting diverse services with varying performance needs rather than solely emphasizing data rate improvements. This shift introduced services like enhanced mobile broadband (eMBB), massive machine-type communication (mMTC), and ultra-reliable low-latency communication (uRLLC) to accommodate numerous devices and critical applications.

In modern wireless communication systems, multiple access (MA) techniques play a crucial role in ensuring efficient utilization of available spectrum resources. Conventional methods such as Time Division Multiple Access (TDMA), Frequency Division Multiple Access (FDMA), Orthogonal Frequency Division Multiple Access (OFDMA), physical layer multicasting, and Space-Division Multiple Access (SDMA) have been adopted in various standards including 4G LTE and 5G. These techniques rely on orthogonal resource allocation through distinct time, frequency, or spatial resource allocation to manage interference among users. However, as the demand for high data rates and reliable communication grows, these traditional schemes face limitations in terms of spectrum efficiency and interference management, particularly in dense user environments. These limitations lead to introducing another MA technique, namely Non-Orthogonal Multiple Access (NOMA) to enhance spectral efficiency (SE) by allowing multiple users to share the same time-frequency resources, even though its reliance on rigid interference management techniques like Successive Interference Cancellation (SIC) poses challenges. The SDMA may be based on linear precoding such as the one presently used in 5th generation (5G) of cellular systems (New Radio, NR). NOMA may be based on linearly pre-coded superposition coding with a successive interference cancellation (SIC).

Since next-generation wireless networks continue to evolve and traditional multiple access methods, such as Orthogonal Multiple Access (OMA) and Non-Orthogonal Multiple Access (NOMA), face significant limitations in accommodating the complexities of future networks, including massive connectivity, heterogeneous devices, and dynamic network conditions, Rate-Splitting Multiple Access (RSMA) emerges as a strong candidate for Next-Generation Multiple Access (NGMA), offering a paradigm shift in how resources and interference are managed in multi-user systems in order to address the demand for advanced multiple access schemes capable of handling diverse and stringent requirements grows.

RSMA is a cutting-edge and flexible communication strategy designed to enhance spectral efficiency (SE), fairness, and adaptability in multi-user wireless networks. It achieves this by splitting user data into common and private components, allowing interference to be strategically exploited rather than simply mitigated. Users decode the common part first, followed by their respective private parts, enabling RSMA to generalize and outperform conventional approaches, such as Space Division Multiple Access (SDMA) and NOMA. This capability makes RSMA particularly advantageous under challenging conditions and dynamically changing network environments, solidifying its position as a leading candidate for the advanced communication systems of the 6G era.

In order to handle interference, NOMA approaches usually use the Successive Interference Cancellation (SIC) at the receiver. For example, in RSMA, SIC decodes the strongest signal, which is the common stream, after that subtracts the common stream from the received signal, and then proceeds to decode the private streams sequentially for multiple users. One of a major advantage of applying the SIC is the effective handling of interference at the receiver, but this SIC comes with its challenges, as follows. First, when the decoding errors occur during the decoding and regenerating of the common signal and proceeding to the private signal, the error propagation effect occurs, causing a degradation of the overall system performance. Another critical drawback is SIC's reliance on accurate channel state information (CSI). Any inaccuracies in channel estimation, often caused by mobility, signal fading, or environmental variations, can compromise its efficacy. In scenarios where multiple SIC processes must be sequentially performed to decode a weak signal, the inherent sequential nature introduces latency. This can pose challenges for applications requiring real-time responsiveness, especially when dealing with a large number of SIC units. Similar challenges arise with NOMA, where SIC is required at the receiver of the near user. In this case, the near user has to perform SIC to decode and cancel the strong signal intended for the far user.

Another aspect in the design of communication systems and networks includes waveform design. The signal design alongside the channel effects is considered in the waveform design. It is important to note that waveform design like OFDM is part of the physical layer design of the communication system, while the design of the multi-access approaches like RSMA is taking part of the medium access control (MAC) layer. Orthogonal Frequency Division Multiplexing (OFDM) has become the dominant waveform for wireless communication systems, finding widespread application in 4G LTE networks and Wi-Fi systems.

However, as wireless communication advances toward 5G, beyond 5G (B5G), and emerging 6G networks, the suitability of OFDM as the primary waveform comes under scrutiny. Therefore, there is a need demand in changing the existing OFDM and make it better or develop other waveforms beyond OFDM that are suitable for multi-access approaches in future wireless networks.

### SUMMARY

Methods and techniques are described herein for facilitating wireless transmission and reception of data employing a New Non-Orthogonal Multiple Access Design Leveraging Waveform Coexistence of OFDM and AFDM, and provides respective methods and techniques thereof.

The invention is defined by the independent claims. Some exemplary implementations are provided by the dependent claims.

For example, a method for wireless transmission of data is provided comprising steps of splitting the data into common data and private data; and transmitting, over a wireless channel, the common data using a first waveform being an Affine Frequency Division Multiplexing, AFDM, waveform and the private data using a second waveform being an Orthogonal Frequency Division Multiplexing, OFDM, waveform different from the first waveform.

Moreover, a method for wireless reception of data is provided comprising steps of: receiving, over a wireless channel, a signal including i) common data transmitted using a first waveform being an Affine Frequency Division Multiplexing, AFDM, waveform and ii) private data transmitted using a second waveform an Orthogonal Frequency Division Multiplexing, OFDM, waveform different from the first waveform; obtaining channel information of the wireless channel using the first waveform and/or the second waveform; determining the common data and the private data from the received signal, based on the channel information; and obtaining the data by combining the determined common data and the private data.

For example, an apparatus for wireless transmission of data is provided comprising: processing circuitry configured to split the data into common data and private data; and a transceiver configured to transmit, over a wireless channel, the common data using a first waveform being an Affine Frequency Division Multiplexing, AFDM, waveform and the private data using a second waveform being an Orthogonal Frequency Division Multiplexing, OFDM, waveform different from the first waveform.

Furthermore, an apparatus for wireless reception of data is provided comprising: a transceiver configured to receive, over a wireless channel, a signal including i) common data transmitted using a first waveform being an Affine Frequency Division Multiplexing, AFDM, waveform and ii) private data transmitted using a second waveform being an Orthogonal Frequency Division Multiplexing, OFDM, waveform different from the first waveform; and processing circuitry configured to: obtain channel information of the wireless channel using the first waveform and/or the second waveform; determine the common data and the private data from the received signal, based on the channel information; and obtain the data by combining the determined common data and the private data.

The above-mentioned circuitry may be any circuitry such as processing circuitry including one or more processors and/or other circuitry elements.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a", "an", and "the" include plural referents unless the context clearly dictates otherwise.

### BRIEF DESCRIPTION OF DRAWINGS

An understanding of the nature and advantages of various embodiments may be realized by reference to the following figures.
- **FIG. 1**: is a block diagram illustrating an exemplary communication system.
- **FIG. 2a**: is a block diagram illustrating an exemplary transmitting device employing the procedure for wireless transmission of data according to the present disclosure.
- **FIG. 2b**: is block diagram illustrating another exemplary receiving device employing the procedure for wireless reception of data according to the present disclosure.
- **FIG. 3**: is block diagram of a basic OFDM transceiver.
- **FIG. 4**: is block diagram of a basic AFDM transceiver.
- **FIG. 5**: is block diagram of a basic RSMA system, including transmitter and receiver.
- **FIG. 6**: is a system model according to the present disclosure.
- **FIG. 7**: is block diagram of a hybrid AFDM-OFDM RSMA transmitter employing coexistence of different waveforms to transmit common data and private data according to the present disclosure.
- **FIG. 8**: is a flow diagram illustrating exemplary steps of transmitting data split into common data and private data according to the present disclosure.
- **FIG. 9**: is a flow diagram illustrating exemplary steps of obtaining data from a received signal including common data and private data according to the present disclosure.
- **FIG. 10**: is a schematic drawing illustrating the allocation of affine and frequency domain subcarriers, along with placing a clean pilot in the affine domain according to the present disclosure.
- **FIG. 11**: is a schematic drawing illustrating the allocation of affine and frequency domain subcarriers, along with placing a clean pilot and a guard in the affine domain with pilots overlapping with data according to the present disclosure.
- **FIG. 12**: is a schematic drawing illustrating the location of common data, private data, and clean pilot after transmission over the channel (over the air) according to the present disclosure.
- **FIG. 13**: is a schematic drawing illustrating the location of common data, private data, and pilot+data after transmission over the channel (over the air) according to the present disclosure.
- **FIG. 14**: is a flow diagram illustrating exemplary steps of transmitting data split into common data and private data and of obtaining the data from a received signal including the common and private data, where the affine domain and/or frequency domain may be exploited to estimate the channel information according to the present disclosure.
- **FIG. 15**: is a flow diagram illustrating exemplary steps of transmitting data split into common data and private data and of obtaining the data from a received signal including the common and private data, where the affine domain is exploited to estimate the channel information according to the present disclosure.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one". Furthermore, as used herein, the term "set" is intended to include one or more items (e.g., related items, unrelated items, a combination of related and unrelated items, and/or the like) and may be used interchangeably with "one or more" or "at least one". Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

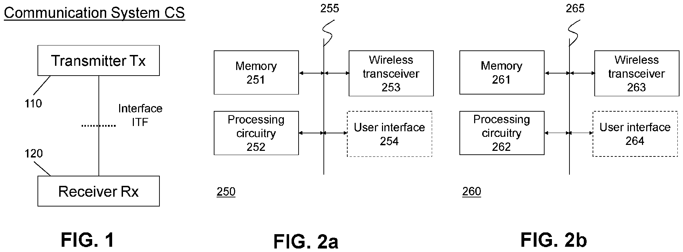

**FIG. 1** illustrates an exemplary communication system CS in which Tx represents a transmitter 110 and Rx represents a receiver 120. The transmitter Tx is capable of transmitting a signal to the receiver Rx over an interface ITF. The interface may be, for instance, a wireless interface. For example, the wireless interface may be implemented by a single antenna of transmitter Tx and/or receiver Rx. Alternatively, the wireless interface may be implemented by multiple antennas of the transmitter Tx and/or receiver Tx. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in **FIG. 1** may, respectively, also include the functionality of the Rx and Tx.

The present disclosure is not limited to any particular transmitter Tx, receiver Rx and/or interface ITF implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems, such as the recently studied IEEE 802.11be, and 6G technologies or the like. The wireless signal may not necessarily be a communication signal in the sense that it does not necessarily carry out human or machine communication. It may be a sensing signal, such as a radar signal or sounding signal or any other kind of wireless signal. The communication signal may be a signal for communication and sensing (Joint Communication and Sensing (JCAS)).

As next-generation wireless networks continue to evolve, the demand for advanced multiple access schemes capable of handling diverse and stringent requirements grows. As mentioned before, traditional MA methods (e.g. OMA and NOMA), face significant limitations in accommodating the complexities of future networks, including massive connectivity, heterogeneous devices, and dynamic network conditions. In view of addressing these limitations, Rate-Splitting Multiple Access (RSMA) emerges as a strong candidate for Next-Generation Multiple Access (NGMA), offering a paradigm shift in how resources and interference are managed in multi-user systems.

RSMA is a cutting-edge and flexible communication strategy designed to enhance spectral efficiency, fairness, and adaptability in multi-user wireless networks. It achieves this by splitting user data into common and private components, allowing interference to be strategically exploited rather than simply mitigated. Users decode the common part first, followed by their respective private parts, enabling RSMA to generalize and outperform conventional approaches such as Space Division Multiple Access (SDMA) and NOMA. This capability makes RSMA particularly advantageous under challenging conditions and dynamically changing network environments, solidifying its position as a leading candidate for the advanced communication systems of the 6G era. Another aspect to consider in the design of communication systems and networks, is the design of a waveform that is (or expected to be) best suited depending on the demands on connectivity, heterogeneity of devices, or dynamic behavior of network conditions. So far, waveform design has relied on OFDM. However, as wireless communication advances toward 5G, beyond 5G (B5G), and emerging 6G networks, the suitability of OFDM as the primary waveform comes under scrutiny. Key questions arise regarding its capability to support the exponentially increasing number of users and the diverse range of service requirements anticipated in future networks.
- Can OFDM meet the stringent performance demands of next-generation networks?
- Should alternative or enhanced waveform technologies, such as Orthogonal Frequency Division Multiple Access (OFDMA), be considered to address these challenges?

These critical considerations must be addressed to enable the design of robust, scalable, and efficient wireless communication systems for the future.

In the literature, the majority of studies on RSMA have overlooked the critical aspects of waveform design, including how the waveform is structured, and which channel impairments are accounted for. Most existing studies exclusively consider OFDM signals, often referring to them as multi-carrier waveforms, without exploring potential modifications that could significantly impact the RSMA system model. In essence, these studies treat OFDM solely as the transmitted signal, neglecting the possibility of alternative or enhanced waveform designs that could improve RSMA or NOMA performances. For example, resource allocation and precoder optimization for multi-carrier waveforms has been investigated, however, without considering any imperfections related to the waveform structure. In practice, waveforms may be susceptible to impairments for various reasons, as in the case of OFDM suffering from inter-carrier interference under Doppler shift. RSMA can help to improve the robustness of waveforms by addressing such vulnerabilities and provide flexibility in waveform design to achieve higher SE. However, how RSMA can help has not been studied in the literature.

So far, the discussed research has been focusing on RSMA schemes across various contexts. For example, a one-layer RSMA model was proposed, where non-orthogonal messages are superimposed in the power domain over OFDM. This approach addresses the non-convex problem of sum rate maximization through a novel three-step resource allocation algorithm, but still relies on SIC and single waveform (OFDM). Building on this study, other work investigated design rate splitting pre-coders for overloaded multicarrier multi-group multicast downlink systems. The error performance was analyzed, extending the RSMA concept to handle complex multi-group scenarios, yet still using SIC and single waveform (OFDM). There is also a place where RSMA is applied in multi-carrier waveforms and multi-antenna cognitive radio systems for joint communications and jamming. In these studies, RSMA is used to simultaneously communicate with secondary users, jam adversarial users, and minimize interference to primary users. An optimization framework was formulated to maximize mutual information while adhering to interference and jamming power constraints. These studies collectively highlight RSMA's adaptability in tackling diverse challenges in communication systems. However, a significant limitation lies in its dependence on SIC, which introduces numerous challenges. These challenges often result in limited compatibility with evolving network requirements -- an undesirable scenario for future networks. In addition, the reliance on a single waveform, specifically OFDM, becomes increasingly inadequate for accommodating the diverse requirements and dynamic variations, as anticipated in beyond 5G (B5G) and 6G wireless communication networks.

Prior studies exploring RSMA integrated with OFDM focused on addressing challenges like resource allocation and interference management. However, these studies fail to overcome the fundamental issue of reliance on SIC for interference management. While SIC has effectively mitigated interference, existing works continue to depend on it without proposing alternatives to its inherent drawbacks, including error propagation, sensitivity to channel imperfections, and latency. This reliance limits the practical applicability of these systems in real-world scenarios due to the lack of compatibility.

Additionally, these studies are constrained by their exclusive use of OFDM as the waveform for RSMA. While OFDM is efficient in frequency-selective channels, it struggles in environments with high mobility or doubly selective channels due to inter-carrier interference (ICI). No consideration has been given to alternative waveforms or introducing the coexistence of it with other waveforms that could provide better robustness against channel variability, leaving a gap in adaptability for diverse network conditions.

Another major limitation is the lack of attention to channel imperfections. Most existing methods assume ideal or static channel conditions, neglecting the variability and imperfections that typically occur in practical systems. This oversight results in performance degradation due to decoding errors caused by unaccounted channel distortions, particularly in dynamic environments.

Finally, while RSMA is inherently flexible and recognized for its superior spectral efficiency compared to traditional schemes, existing approaches may fail to fully capitalize on its potential in dynamic environments. When resource allocation must rapidly adapt to varying user requirements and environmental (channel) conditions, reliance on suboptimal implementations, such as systems heavily dependent on SIC, can lead to inaccuracies and inefficiencies. These limitations hinder RSMA's ability to meet the stringent demands of next generation, which make it hard to meet the stringent requirements of 6G networks, such as enhanced spectral efficiency, and adaptability in highly dynamic and complex environments, so that there is an urgent demand in evolving RSMA beyond its current state. It is noted that the above drawbacks applied to RSMA also applies to NOMA, where all of these are types of non-orthogonal multiple access, because the structure of the transmission and reception processes is similar.

To address these pressing issues, it is essential to explore and propose alternative solutions capable of overcoming existing limitations and ensuring robust, flexible, and scalable communication systems for the future.

The present disclosure addresses the above-mentioned challenges and introduces an approach that eliminates the reliance on SIC by employing a coexistence strategy of two waveforms within 6G networks. Specifically, the design utilizes Affine Frequency Division Multiplexing (AFDM) for common data transmission at higher power, while Orthogonal Frequency Division Multiplexing (OFDM) is employed for private data transmission at lower power or vice versa. In NOMA systems, the proposed design of the present disclosure offers significant flexibility and adaptability, as it eliminates the need for SIC in this coexistence scheme. For instance, when users are equidistant from the base station (BS), equal power can be allocated to them, allowing the OFDM resources to be divided equally and orthogonally. Additionally, a smaller portion of extra data, which must be less than the total OFDM resources, can be shared between the two users. In another scenario, where users are positioned at different distances from the BS (near and far users), the data allocation becomes dual domain yet overlapping. The near user's data is distributed across two domains: one portion (less than the far user's data in frequency) is spread across OFDM subcarriers, while the remaining part is mapped to affine domain indices that overlap with the frequency domain data. Meanwhile, the far user exclusively utilizes clean frequency-domain resources without overlapping. Overall, both users will have an equal amount of data, but the near user benefits from the overlapped data allocation due to their stronger received signal power, leading to enhanced performance.

This waveform coexistence approach allows the receiver to distinguish data using different domains when resources are shared non-orthogonally between users, namely the frequency domain for OFDM and the affine domain for AFDM. This may be combined with exploiting power level differences for enhanced separation. By removing the need for SIC and integrating the concept of waveform coexistence, the approach of the present disclosure simplifies receiver design, reduces error propagation, and enhances robustness, thereby addressing critical challenges in future wireless communication systems. Furthermore, the present disclosure offers an alternative means of achieving non-orthogonal multiple access between users without relying on the conventional processes associated with NOMA and RSMA. As such, this approach can be considered a pioneering Next-Generation Multiple Access (NGMA) technique, setting a new standard for the future of wireless communication networks.

As detailed below, the present disclosure integrates AFDM and OFDM within the RSMA framework to form a robust solution tailored for 6G networks. By combining AFDM and OFDM, the approach of the present disclosure maximizes the unique advantages of both waveforms, achieving optimal performance when used together. To provide a comprehensive understanding of the approach, the key components - OFDM, AFDM, and RSMA -- are first introduced and their roles within the 6G context are elaborated below.

**Orthogonal Frequency Division Multiplexing (OFDM)** is a widely adopted multicarrier modulation technique designed to transmit high-data-rate streams by dividing them into multiple parallel low-rate streams, each transmitted over orthogonal subcarriers. This orthogonality prevents interference among subcarriers, ensuring efficient use of bandwidth and robust performance in frequency-selective channels. An OFDM signal is expressed as: ${s}^{OFDM} \left(n\right) = \frac{1}{\sqrt{N}} {\sum }_{k = 0}^{N - 1} {X}^{OFDM} \left(k\right) {e}^{j 2 π \frac{kn}{N}} ,$ where *X*^{OFPM}(*k*) represents frequency-domain data symbols, *N* is the number of orthogonal subcarriers, and *n* is the time index. The addition of a cyclic prefix (CP) mitigates the effects of multipath reflections, converting linear convolution into circular convolution and simplifying equalization using Fast Fourier Transform (FFT). Circular convolution is also known as cyclic convolution and is use particularly in cases when signals are periodic or discrete Fourier transforms. It differs from linear convolution in that it assumes the signals are periodic, meaning that after reaching the end, they wrap around and continue. Mathematically, for discrete signals x[n] and h[n], their circular convolution y[n] is given by: $y \left[n\right] = {\sum }_{m = 0}^{N - 1} x \left[m\right] h \left[\left(n-m\right) mod N\right] ,$ where N is the length of the periodic signals.

This feature makes OFDM particularly robust in multipath fading environments. Moreover, its spectral efficiency is enhanced by overlapping subcarriers in the frequency domain, avoiding bandwidth wastage.

OFDM's low computational complexity, enabled by FFT-based signal processing, makes it efficient for real-time applications. Additionally, its compatibility with Multiple Input Multiple Output (MIMO) systems allows for spatial diversity and higher capacity, further extending its versatility.

These features have made OFDM the backbone of modern wireless communication systems. OFDM finds extensive use in mobile communication systems, serving as the foundation of 4G LTE and 5G New Radio (NR) for high-speed broadband connectivity. It is integral to Wi-Fi (IEEE 802.11 standards), providing reliable short-range communication, and is widely utilized in digital broadcasting, including Digital Audio Broadcasting (DAB) and Digital Video Broadcasting (DVB-T and DVB-T2). In broadband internet access, OFDM powers DSL systems and fixed wireless networks, ensuring efficient connectivity in urban and rural areas. Furthermore, it supports loT applications, enabling dense networks in smart cities and industrial automation, and facilitates advanced techniques like massive MIMO and beamforming in 5G networks. Key features of OFDM include its resistance to multipath fading by dividing data into narrowband streams, high spectral efficiency through subcarrier overlap, and simplified equalization via the CP. Its scalability and adaptability make it suitable for diverse channel conditions and system requirements, addressing a wide range of applications. While OFDM demonstrates limitations in high-mobility scenarios, such as vulnerability to inter-carrier interference (ICI) under Doppler effects, it remains a critical technology in next-generation wireless systems, with hybrid waveform designs addressing these challenges.

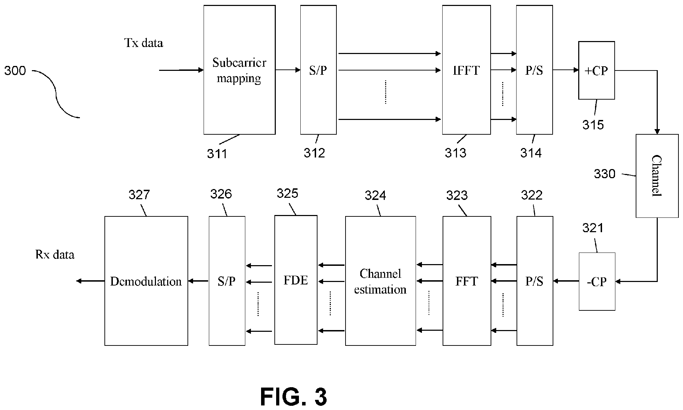

**FIG. 3** shows a block diagram of an exemplary basic OFDM transceiver, including a transmitter branch and a receiver branch. The transmitter branch entails modules (units), such as Subcarrier mapping 311, S/P 312, IFFT 313, P/S 314, and +CP 315. The receiver branch entails similar modules as the transmitter branch to perform reverse processing, such as -CP 321, P/S 322, FFT 323, Channel Estimation 324, FDE 325, S/P 326, and Demodulation 327. The transmitter and receiver branch are "connected" via channel 330. Data to be transmitted are input to the Subcarrier mapping unit 311, where temporal serial data are mapped onto symbols and respective OFDM subcarriers, which are then subjected to serial-to-parallel conversion in S/P unit 312, transform via IFFT 313 unit from the time-domain into the frequency domain, parallel-to-serial conversion in P/S unit 314, and adding of a cyclic prefix in unit +CP 315. After transmitting the Tx data via the Channel 330 to the receiver, the received signal is subjected to subtracting the cyclic prefix in unit -CP 321, serial-to-parallel conversion in P/S unit 322, transform via FFT 323 unit from the frequency-domain into the time domain, estimation of the channel characteristics by Channel estimation 324, equalization of the channel in the frequency domain in unit FDE 325, parallel-to-serial conversion in S/P unit 326, and demodulation the Rx data from the symbols in unit Demodulation 327. It is noted that the naming S/P and P/S may stand for serial-to-parallel or parallel to serial conversion, depending on which side the signal is input to the respective unit 312, 314, 322, and 326. For example, in the receiver branch, the signal to be processed is input to P/S unit 322 from the right, meaning that the inputted signal is a serial signal in time and unit 322 provides a parallel signal as output. Hence, unit P/S 322 performs a serial-to-parallel conversion.

**Affine Frequency Division Multiplexing (AFDM):** AFDM is an advanced multicarrier waveform that builds on traditional techniques like OFDM, but introduces unique chirp-based modulation. In AFDM, the signal is constructed as a combination of multiple chirp signals across subcarriers, with the phase of each subcarrier being modulated by an affine transformation. This combination of chirps creates a waveform that spreads across both time and frequency domains, making it highly resilient to challenging channel conditions, such as Doppler effects and time-varying multipath propagation. A chirp signal is a sinusoidal signal with a frequency that increases or decreases linearly (or quadratically) over time. AFDM leverages these chirps in its design to counteract the effects of time-frequency dispersion, which can significantly degrade the performance of traditional waveforms like OFDM in doubly dispersive channels.

The AFDM signal is expressed mathematically as: ${s}^{AFDM} \left(n\right) = \frac{1}{\sqrt{N}} {\sum }_{i = 0}^{N - 1} {X}^{AFDM} \left(i\right) {e}^{j 2 π \left({c}_{1}{n}^{2}+ni/N+{c}_{2}{i}^{2}\right)} ,$ where *X^{AFDM}* represents the data symbols modulated onto subcarriers, the factor *c*₁ controls the chirp rate in the time domain, and *c*₂ adjusts the chirp rate across subcarriers. *n* represents the time index, and finally *N* is the number of subcarriers. The affine transformation parameters (*c*₁ and *c*₂) spread symbols across the frequency domain, enhancing resilience against narrowband interference and frequency-selective fading, while reducing the peak-to-average power ratio (PAPR). This spreading characteristic, combined with flexible parameter tuning, enables AFDM to adapt to diverse channel conditions, ensuring robust performance in dynamic scenarios. Additionally, AFDM supports efficient joint channel estimation and equalization in both time and frequency domains, reducing computational complexity while maintaining high decoding accuracy. Its chirp-based modulation naturally supports integrated sensing and communication (ISAC, often also referred to as joint sensing and communication (JSAC) or joint communication and sensing (JCAS)), enabling simultaneous data transmission and environmental sensing, which is ideal for applications, such as automotive radar, navigation, and remote sensing.

AFDM finds widespread use in high-mobility scenarios, including Vehicle-to-Everything (V2X) systems, high-speed rail communication, and aeronautical networks, where its resilience to Doppler effects ensures robust connections. It is also a strong candidate for Beyond 5G (B5G) and 6G networks, addressing the limitations of traditional waveforms like OFDM in dynamic environments. AFDM's adaptability makes it ideal for Integrated Sensing and Communication (ISAC), where dual functionality is required, such as in automotive radar integrated with V2X communication for safety and navigation. Furthermore, AFDM supports Ultra-Reliable Low-Latency Communication (uRLLC) applications, including industrial automation, and drone operations, where low latency and reliability are critical. It enhances loT performance in harsh environments, such as underwater or urban high-mobility scenarios, ensuring reliability under variable delays and Doppler shifts. AFDM's versatility and robustness make it a foundational technology for next-generation wireless communication systems.

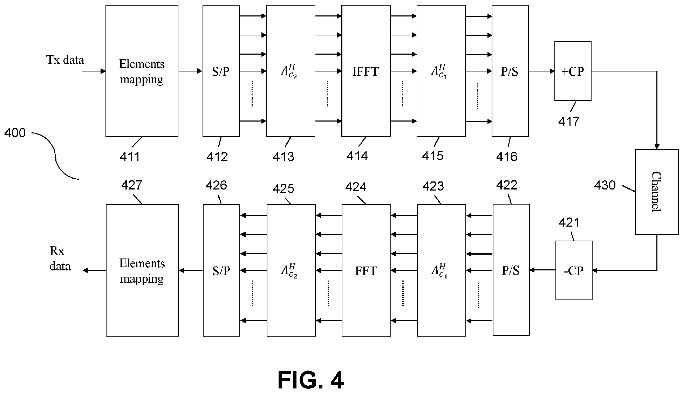

**FIG. 4** shows a block diagram of an exemplary AFDM transceiver, including a transmitter branch and a receiver branch. The transmitter branch entails modules (units), such as Elements mapping 411, S/P 412 *,* ${Λ}_{{c}_{2}}^{H}$ 413, IFFT 414, ${Λ}_{{c}_{1}}^{H}$ 415, P/S 416 and +CP 417. The receiver branch entails similar modules as the transmitter branch to perform reverse processing, such as -CP 421, S/P 422, ${Λ}_{{c}_{1}}^{H}$ 423, FFT 424, ${Λ}_{{c}_{2}}^{H}$ 425, P/S 426, and Elements mapping 427. Channel 430 connects the transceiver and the receiver. Since the AFDM transceiver relies on the use of the AFDM waveform that can be adapted by the AFDM parameters *c*₁ and *c*₂, the AFDM transceiver entails additional modules ${Λ}_{{c}_{2}}^{H}$ and ${Λ}_{{c}_{1}}^{H}$*,* each of which transform the Tx data. Specifically, the unit ${Λ}_{{c}_{2}}^{H}$413 performs a transform of the symbols *X^{AFDM}*(*i*) in the frequency domain, while the unit ${Λ}_{{c}_{1}}^{H}$ 415 performs a transform in the time domain. Therefore, in the block diagram of **FIG. 4****,** the unit ${Λ}_{{c}_{2}}^{H}$413 appears to the left and the unit ${Λ}_{{c}_{1}}^{H}$ 415 appears to the right of the IFFT unit 414. Hence, the order in which units 413 to 415 are arranged in the transmitter part are a results of the particular AFDM waveform, which may be re-written by: ${s}^{AFDM} \left(n\right) = \frac{1}{\sqrt{N}} {\sum }_{i = 0}^{N - 1} {X}^{AFDM} \left(i\right) {e}^{j 2 π \left({c}_{1}{n}^{2}+ni/N+{c}_{2}{i}^{2}\right)} = {e}^{j 2 π {c}_{1} {n}^{2}} \frac{1}{\sqrt{N}} {\sum }_{i = 0}^{N - 1} {e}^{j 2 π ni / N} ∗ {e}^{j 2 π {c}_{2} {i}^{2}} {X}^{AFDM} \left(i\right) .$

As can be seen from the right-hand-side expression, the first term having the AFDM coefficient *c*₁ multiplies the time-domain symbols, i.e. the symbols after being transformed via IFFT from frequency domain into the time domain. In turn, the expression *e*^{j2*πc*₂*i*²}*X^{AFDM}*(*i*) represents a multiplication of the frequency-domain symbols *X^{AFDM}*(*i*) by the *c*₂-term *e*^{j2π*c*₂*i*²}, such that *e*^{j2*πc*₂*i*²}*X^{AFDM}*(*i*) may be viewed as *c*₂-transformed AFDM symbol *X̃^{AFDM}*(*i*)*.* This symbol *X̃^{AFDM}*(*i*) is then Fourier transformed. Hence, the right hand expression can be represented by three sequential operations (1) *c*₂ transform performed by unit ${Λ}_{{c}_{2}}^{H}$*,* (2) (inverse) Fourier Transform performed by unit IFFT, and (3) *c*₁ transform performed by unit ${Λ}_{{c}_{1}}^{H}$*.* It is noted that similar reasoning applies for the order of the units ${Λ}_{{c}_{1}}^{H}$ 423, FFT 424, and ${Λ}_{{c}_{2}}^{H}$ 425 in the receiver branch, except that now the transform by unit ${Λ}_{{c}_{1}}^{H}$ comes before the transform by unit ${Λ}_{{c}_{1}}^{H}$*.*

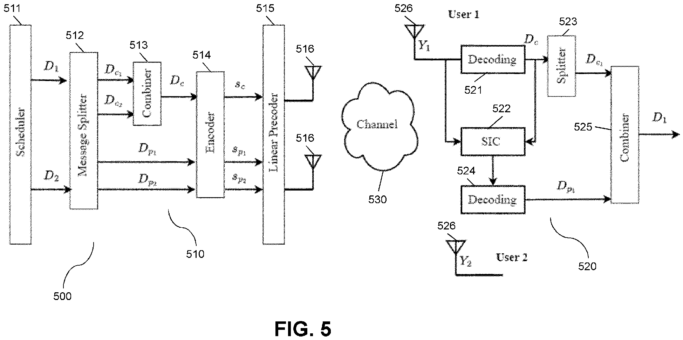

**Rate-Splitting Multiple Access (RSMA)** is a powerful and flexible communication strategy designed to manage multi-user interference in wireless systems efficiently. **FIG. 5** shows an exemplary basic RSMA System Model 500 comprising a RSMA transmitter 510 and RSAM receiver 520. In the example of **FIG. 5****,** there are two users. However, the system model 500 is not limited to just two users, rather may be scalable to more than two users. Scheduler 511 schedules one or more data D1 and D2 of one or more users 1 and 2. Scheduler 511 plays a critical role in the user selection and data stream assignment process. It is responsible for determining which users are active during a given transmission interval and allocating their corresponding data streams (D1, D2, etc.). Once selected, the scheduler forwards the data for the active users to the message splitter. RSMA operates by splitting each user's data into two components: a common part which is shared and decoded by multiple users, and a private part which is decoded individually by each user. The common part contains information intended for all users, enabling interference to be treated as a resource rather than a limitation. At the transmitter 510, the data streams for all users are processed by a message splitter 512, which separates the common parts D_{c1} and D_{c2} and private parts Dₚ₁ and Dₚ₂, respectively. Combiner 513 then combines the common parts from all users (e.g. user 1 and 2) are then combined into a single common stream D_{c}, while the private parts Dₚ₁ and Dₚ₂ remain distinct for each user. The streams D_{c}, Dₚ₁, and Dₚ₂ are then encoded by Encoder 514 providing for encoded streams s_{c}, sₚ₁, and sₚ₂. The encoded streams are further precoded, using a linear precoder 515, which optimizes transmission over a multiple-input multiple-output (MIMO) channel to ensure efficient spatial resource utilization and interference mitigation. The transmitted signals consist of the precoded common and private streams, broadcast over the wireless channel 530 via antennas 516.

At the receiver 520, each user first decodes by Decoding unit 521 the common stream D_{c} from their respective reception signal Y₁ or Y₂, since the D_{c} stream has been transmitted with the highest power. After that, to be able to decode the private stream of the original message D₁ or D₂, the SIC determined by SCI unit 522 is used. The SIC is achieved, when the common part is regenerated based on the channel state information (CSI) at the receiver and is subtracted from the total received signal Y₁ or Y₂, thereby eliminating its interference and enabling the accurate decoding of the private part. In **FIG. 5****,** SIC unit 522 takes as input the total received signal, for example, Y₁, and the decoded common stream D_{c}, subtracts D_{c} from Y1 and the stream difference is input to decoding unit 524 which decodes the private part Dₚ₁. The common part D_{c1} of user 1 is split off from the decoded common stream D_{c} by Splitter 523. Once both the common and private parts are decoded, they are combined by Combiner 525 to reconstruct the original message D₁ or D₂ for the respective user 1 or 2.

RSMA's ability to split and manage data streams in this manner provides significant advantages, including improved spectral efficiency, better interference management, and enhanced adaptability in diverse network conditions. However, the reliance on SIC introduces challenges, such as increased decoding latency, error propagation, and dependence on accurate CSI, which can complicate its implementation in real-world scenarios. RSMA demonstrates its versatility by leveraging the concept of common and private streams to optimize resource allocation, efficiently manage interference, and ensure reliable communication, even in dynamic and heterogeneous environments.

Based on the above information of AFDM, OFDM, and RSMA, the present disclosure addresses challenges in interference management due using the SIC, decoding complexity, and channel estimation for RSMA networks, offering a novel and efficient framework for next-generation wireless networks. In the following, a description of these three aspects is provided.

**Channel estimation** is the process of characterizing the properties of the communication channel to enable accurate signal decoding. This involves estimating parameters, such as channel gain, delay, and phase distortions introduced by the medium (e.g. the wireless channel). Channel estimation is critical for mitigating the effects of multipath fading, Doppler shifts, and noise, ensuring reliable data transmission. It is typically performed using pilot symbols, which are predefined signals known to both the transmitter and receiver. These pilots are inserted into the transmitted signal at regular intervals. The receiver uses these pilots to estimate the channel's response and apply necessary corrections during equalization of the channel.

**Channel equalization** is a technique used in wireless communication to compensate for distortions that occur when signals travel through a transmission channel. These distortions can be caused by multipath propagation, frequency-selective fading, inter-symbol interference (ISI) or the like.

**Interference management** is a critical aspect of wireless communication systems, involving techniques to mitigate the impact of interference that arises when multiple signals overlap in the same frequency, time, or spatial domain, leading to degraded performance. Common strategies for managing interference include interference avoidance, which allocates orthogonal resources such as frequency, time, or spatial separation to prevent overlap; interference cancellation, which employs techniques like SIC to decode and subtract stronger signals, allowing weaker ones to be recovered; and interference coordination, where transmission parameters, such as power and beamforming are coordinated across base stations to reduce inter-cell interference.

RSMA approaches interference management by not treating interference solely as a limitation. Instead, it splits user data into common and private parts. The common part that is shared among multiple users is decoded first and subtracted from the received signal, effectively managing interference. The private parts are then decoded individually, utilizing remaining resources efficiently. This approach transforms interference into a manageable resource, providing superior spectral efficiency compared to traditional methods like SDMA or NOMA.

From a waveform perspective, OFDM manages interference by ensuring orthogonality between subcarriers and using cyclic prefixes to combat multipath interference, though it remains vulnerable to inter-carrier interference (ICI) under Doppler shifts. AFDM, on the other hand, uses chirp-based modulation and spreading characteristics to counteract interference in doubly dispersive channels, with its spreading property making it highly robust to time-frequency selective interference. Together, RSMA and waveform-specific approaches offer robust solutions for interference management in dynamic and challenging wireless environments.

**Decoding complexity** refers to the computational effort required to decode a received signal and reconstruct the transmitted data. High decoding complexity can lead to increased processing delays and power consumption, negatively impacting system efficiency. To manage decoding complexity, techniques such as simplified equalization, like one-tap equalization in OFDM, reduce computational burdens, while layered decoding, as seen in RSMA, employs SIC to decode signals sequentially, starting with the strongest signal. However, in RSMA, the decoding complexity is amplified due to the reliance on SIC, which requires each decoded signal to be subtracted from the received signal before proceeding to the next. This introduces challenges such as increased latency and dependence on accurate CSI, where errors in CSI can propagate through the SIC process and degrade performance. From a waveform perspective, OFDM minimizes decoding complexity through the use of orthogonal subcarriers and FFT-based equalization, though it demands precise synchronization to maintain subcarrier orthogonality. On the other hand, AFDM simplifies equalization through its spreading characteristics in both the affine and frequency domains. Decoding complexity is closely tied to compatibility, as diverse devices often include resource-constrained nodes that struggle with RSMA's reliance on SIC or computationally demanding waveforms like AFDM. By reducing decoding complexity, systems become more accessible to a broader range of devices, including low-power loT terminals. RSMA combined with AFDM strikes a balance by simplifying receiver design, while maintaining robustness, ensuring suitability for applications in dynamic and resource-limited environments, particularly in 5G and 6G networks.

In the following, details of the approach of the present disclosure are discussed by means of exemplary embodiments and exemplary implementations.

### First Embodiment

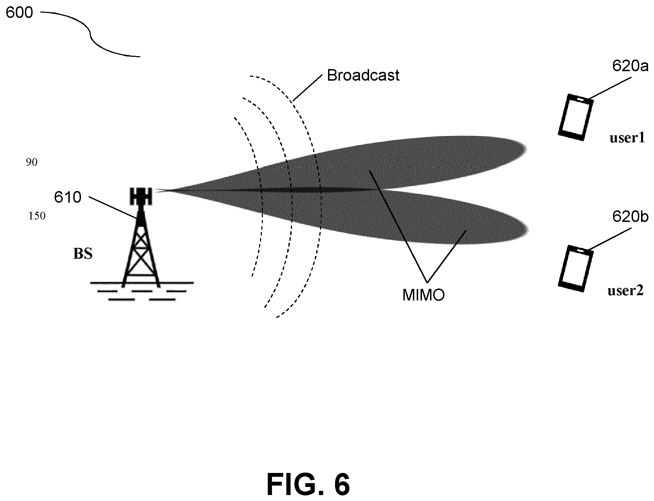

**FIG. 6** shows an exemplary system model 600 of the present disclosure. In this model, a Base Station 610 (BS) employs RSMA as multi-access technique to serve two communication entities 620a and 620b, indicated as user1 and user2, respectively. The communication entities may be any communication entity communicating with the base station 610, e.g. in a wireless manner. A communication entity may be a wireless communication apparatus or device, a mobile communication device, a user equipment (UE), a terminal, a station (STA), a smartphone, a wearable, an IoT device, or the like.. The BS 610 may communicate with the communication entities via MIMO and/or broadcast transmission and/or reception. While the example in FIG. 6 demonstrates the approach for two users, it is important to note that the approach of the present disclosure is scalable and can be extended to accommodate more than two users.

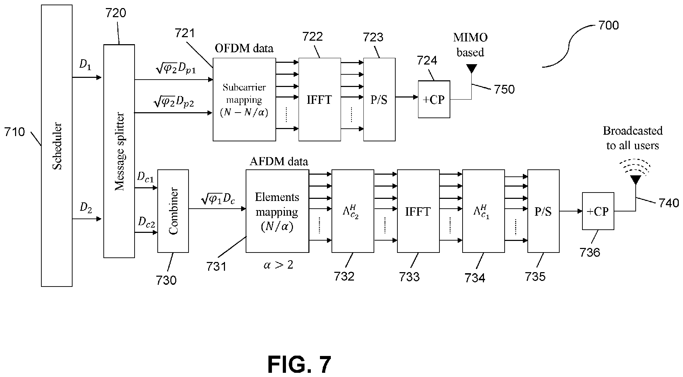

**FIG. 7** shows an exemplary apparatus 700 for wireless transmission of data of the present disclosure, performing various processing of said data. The apparatus 700 includes similar modules or units as those comprised in isolation in the respective transmitter branch of OFDM transceiver 300 in **FIG. 3****,** the AFDM transceiver 400 in **FIG. 4****,** and the RSMA transmitter 510 in **FIG. 5****.** Specifically, said modules may include Scheduler 710, Message splitter 720, Combiner 730, Elements mapping 731, ${Λ}_{{c}_{2}}^{H}$ 732, IFFT 733, ${Λ}_{{c}_{1}}^{H}$ 734, P/S 735, +CP 736, broadcast antenna 740, Subcarrier mapping 721, IFFT 722, P/S 723, +CP 724, and MIMO antennas 750.

The data may be data for two or more users, with the data being managed by a scheduler, for example. The scheduler may assign User 1's data (D1) and User 2's data (D2) to the system. The message splitter may then split the data into two parts:
1. Common data: Dc1 for User 1 and Dc2 for User 2.
2. Private data: Dp1 for User 1 and Dp2 for User 2.

The common data refers to information intended for multiple users in the network, such as broadcast or multicast messages. The private data are user-specific and intended for individual users. Both types of data may originate from one or more users or services.

### Combining Common Data:

The combiner 730 processes the common data Dc1 and Dc2 to create single combined common data Dc. The combined common data may be combined in a common data stream Dc, which contains shared information for both users. The combined common data may be also referred to as common data, meaning that said common data includes two or more common parts of data of respective two or more users. The combined common data may be modulated in the Elements mapping unit 731, using AFDM, where it undergoes spreading in the frequency domain. The common data may be modulated with a first power. Therefore, the common data signal to be transmitted can be given as: ${s}^{AFDM} \left(n\right) = \frac{\sqrt{{φ}_{1}}}{\sqrt{N}} {\sum }_{i = 0}^{N - 1} {X}^{AFDM} \left(i\right) {e}^{j 2 π \left({c}_{1}{n}^{2}+ni/N+{c}_{2}{i}^{2}\right)} ,$ where *c*₁ and *c*₂ are the AFDM parameters as noted before, and $\sqrt{{φ}_{1}}$ refers to the first power allocated for the common data. N is an integer equal to 2 or larger and refers to the total number of subcarriers, *X^{AFDM}*(*i*) refers to the common data at i-th subcarrier, and *n* refers to a time instance. The time instance may be continuous or discrete (due to sampling the temporal original data with a predefined sampling rate). It is noted that the total number of subcarriers may be used for transmitting the common data and private data. Among the N subcarriers, a subset of, for example, *N*/*α* subcarriers may be used to transmit the common data. This means that a fraction 1/*α* of the total number of N subcarriers may be allocated for common data, while a remaining fraction of (1 - 1/*α*) of subcarriers may be used to transmit the private data. *α* is a positive integer equal to 2 or larger. If *α* is larger than 2, the above allocation strategy of allocating a fraction 1/*α* of the total N subcarriers to common data ensures that the common data is concentrated over fewer subcarriers. This leads to an increase in its power density and making it more robust for decoding, without the need for SIC, while the remaining subcarriers are reserved for private data transmission.

### Processing Private Data:

After the private data are split from the data, the private data may be modulated with a second power. In the example of **FIG. 7****,** the private data Dp1 and Dp2 of user1 and user2 are processed using OFDM. OFDM operations, such as subcarrier mapping by unit 721 and the addition of a cyclic prefix (CP) by unit 724, are applied. OFDM is chosen for the private data, because of its compatibility with MIMO-based SDMA, enabling efficient user separation. Then, the transmitted private data signal is given as follows: ${s}^{OFDM} \left(n\right) = \frac{\sqrt{{φ}_{2}}}{\sqrt{N}} {\sum }_{m = 0}^{N - 1} {X}^{OFDM} \left(m\right) {e}^{j 2 π \frac{mn}{N}} ,$ where $\sqrt{{φ}_{2}}$ refers to the second power allocated for the private data. *N* is an integer equal to 2 or larger and refers to the total number of subcarriers, *X^{AFDM}*(*m*) refers to the common data at m-th subcarrier, and *n* refers to a time instance. The time instance may be continuous or discrete (due to sampling the temporal original data with a predefined sampling rate). The second power $\sqrt{{φ}_{2}}$ may be lower than the first power $\sqrt{{φ}_{1}}$. The common data and the private data may be multiplexed in the power domain in accordance with the first power and the second power.

The reason that the common data may be transmitted with a higher power (first power) than the power (second power) used to transmit the private is, because the common data, once processed in the affine domain, spreads across the frequency domain according to the AFDM factor c1, resulting in a reduction in power density for the common data. Using a higher power for the common data transmission compensates for the reduced power density, while the private data, which remains localized in the frequency domain, is transmitted at lower power (second power). This difference in the power used for the common and private data may be exploited to decode the common and private data at the receiver side. Accordingly, more data is allocated to the private part. In **FIG. 7****,** the fraction of a total of number of N subcarriers being allocated to the common part and private part may be determined by a positive integer α, which, in the example of **FIG. 7****,** is larger than 2. Hence, the number *N*/*α* of subcarriers allocated for the common data is smaller than the number (*N* - *N*/*α*) of subcarriers allocated for the private data.

### Transmission:

The common data (AFDM) and private data (OFDM) may be transmitted over a wireless channel simultaneously in the time domain. The common data may be transmitted using a first waveform and the private data may be transmitted using a second waveform different from the first waveform. The first waveform may be an Affine Frequency Division Multiplexing, AFDM, waveform. The second waveform may be an Orthogonal Frequency Division Multiplexing, OFDM, waveform. In **FIG. 7****,** the use of different waveforms is reflected in implementing the exemplary RSMA transceiver 700 by two sequences of units, performing OFDM-based processing of the private data and AFDM-based processing of the common data. These OFDM units include the Subcarrier mapping unit 721 for OFDM data, IFFT unit 722, P/S unit 723, and +CP unit 724. The AFDM-units include Elements mapping unit 731 for the AFDM data and ${Λ}_{{c}_{2}}^{H}$ unit 732 and ${Λ}_{{c}_{1}}^{H}$ unit 734 sandwiching the IFFT unit 733. The functionality of the units ${Λ}_{{c}_{2}}^{H}$ and ${Λ}_{{c}_{1}}^{H}$ has been elaborated before, when discussing the AFDM transceiver 400 in **FIG. 4****,** including why the unit ${Λ}_{{c}_{2}}^{H}$ is placed before and the unit ${Λ}_{{c}_{1}}^{H}$ is place after the IFFT unit for the transmitter part. It is noted that the order of units ${Λ}_{{c}_{2}}^{H}$ and ${Λ}_{{c}_{1}}^{H}$ with respect to the IFFT unit is reversed for the receiver part of the RSMA-AFDM-OFDM transceiver of **FIG. 7****.**

Which of the waveforms is used for transmitting the common and private data may be predefined and known to the transmitter and the receiver of the RSAM transceiver in advance. Accordingly, dynamically signaling on which waveform to use may be avoided during transmission of the common and private data. As a result, the RSMA receiver (e.g. UE) can directly apply the appropriate transform (affine or Fourier), based on the type of data (e.g. common data or private data) it is configured to decode. Moreover, which of the waveforms to use for the common data and the private data may be independent on the power level applied to the common and private data.

The common data may be transmitted by broadcast and the private data may be transmitted using multiple antennas. The RSMA transceiver may have two or more antennas to transmit the common data and the private data. The RSAM transceiver may perform beamforming such that the private data are transmitted via two or more antennas to multiple users (MIMO-based transmission). Likewise, the RSAM transceiver may generate a beam for broadcast transmission of the common data to all of the two or more users. For example, the common data may be transmitted omni-directionally. In turn, the private data may be spatially transmitted, meaning transmitted using spatial multiplexing across multiple antennas (MIMO/SDMA). Since the common data and the private data are multiplexed in the power domain, the RSMA transceiver 700 may use the same number of antennas, but with different power levels. In **FIG. 7****,** the antenna 750 and antenna 740 may refer to the same number of antennas, where a first group of antennas is driven according to MIMO and a second group of antennas is driven according to broadcast.

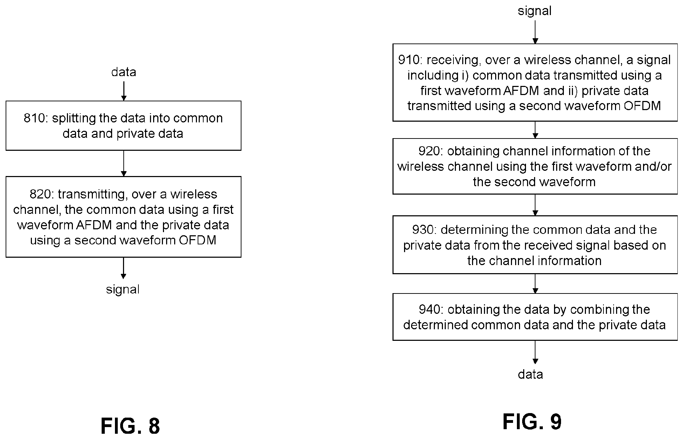

**FIG. 8** shows an exemplary flowchart for wireless transmission of data according to the present disclosure. In step 810, data to be transmitted to multiple users may be split into common data and private data. In step 820, the common data and the private data may be transmitted over a wireless channel. The common data may be transmitted using a first waveform and the private data may be transmitted using a second waveform different from the first waveform. The first waveform may be an Affine Frequency Division Multiplexing, AFDM, waveform and the second waveform may be an Orthogonal Frequency Division Multiplexing, OFDM, waveform. The exemplary RSMA transceiver of **FIG. 7** may perform the above processing steps, with its respective units, as detailed above.

Since two different waveforms are used to transmit the common and private data, attention has to be paid on pilot embedding, so that the RSMA receiver is able to perform channel estimating and channel equalization. In the flowing, two options are discussed for pilot embedding in account of allocation of the common data and private data at respective subcarriers.

### Clean pilot:

In the first pilot embedding method of the present disclosure, a pilot signal (also referred to as pilot) may be allocated at one of affine subcarriers having a first index that is lower than a preconfigured factor of the affine domain. The preconfigured factor may be the AFDM parameter *c*₁. For example, the pilot signal may be placed at an index *c*₁ - 1 in the affine domain, which is lower than *c*₁. The common data may be allocated at affine subcarriers in the affine domain. The affine subcarriers may have respective indices that are determined by the preconfigured factor. Accordingly, these indices, at which the pilot is positioned, are determined by the factor *c*₁. The common data is transmitted with higher power on these affine subcarriers. The private data, on the other hand, is allocated in the frequency domain using OFDM.

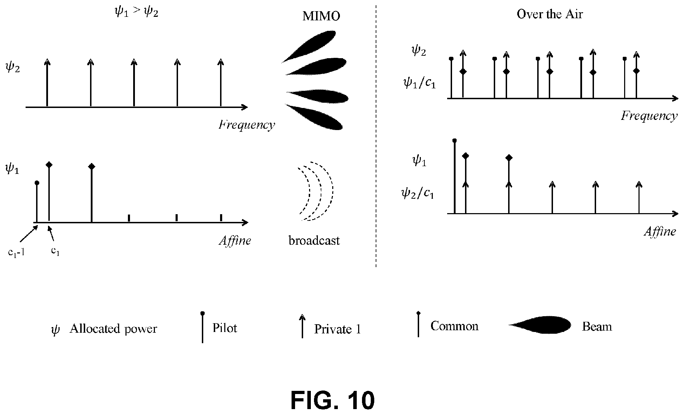

**Fig. 10** illustrates on the left-hand side the respective allocation of the common data and the private data in their respective domain. ψ refers to the allocated power with which the common and private data are transmitted on their allocated subcarriers. In the example shown, *ψ*₁ > *ψ*₂ reflecting that the power used to transmit the common data (indicated by the solid black line with diamond on top) is larger than the power used to transmit the private data (indicated by the solid black line with arrow on top). The solid black line with bullet on top indicates the pilot, which is allocated right to the left of the first affine subcarrier, at which the common data is allocated. These affine subcarriers have indices *c*₁ - 1 and *c*₁, respectively. The private data are allocated at subcarriers in the frequency domain. The black lobes indicate beams that the RSMA transceiver generates to transmit the private data to a specific users.

The right-hand side of **FIG. 10** illustrates that the signals are summed in the frequency domain when transmitted over the air, causing the common data to spread across all subcarriers in the frequency domain, according to the preconfigured factor *c*₁ with lower power *ψ*₁/*c*₁. As a result, the common data may have lower power than the power of the private data in the frequency domain. In the affine domain, the signals are also observed as summed. However, in this case, it is the private data that is now spread with lower power *ψ*₂/*c*₁ instead of the common data.

### Pilot + data:

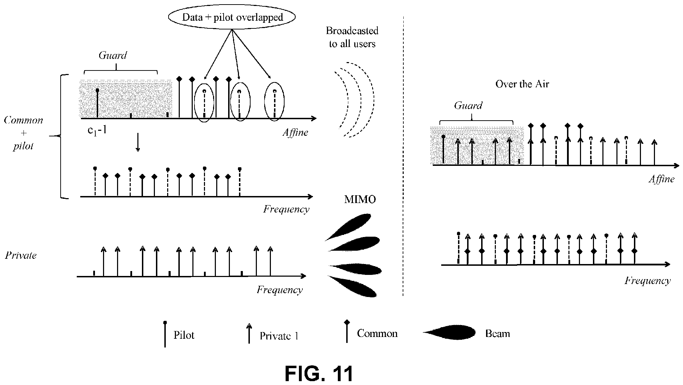

In the second pilot embedding method of the present disclosure, a pilot signal is allocated in the affine domain at a first affine subcarrier that has a first index. The first index may, for example, be an index 0 of the affine subcarrier and the respective single pilot signal occupies one affine subcarrier before any data symbols are mapped. After the single pilot insertion, a guard interval may be allocated at affine subcarriers whose indices are greater than the first index to ensure separation and prevent interference between the initial pilot and the subsequent common data block. For example, the guard interval may have a length G. The remaining affine subcarriers are then utilized to allocate the common data and have indices that are greater than the indices of the affine subcarriers of the allocated guard interval. In particular, a first segment of common data symbols may be mapped continuously across the next affine subcarriers, whose indices are greater than the guard interval subcarrier indices. This is followed by exploiting the affine scaling factor *c*₁, which means: at every affine index of a subcarrier that is an integer multiple of *c*₁ (i.e. at indices *c*₁, 2*c*₁, ...), a fresh pilot symbol is superposed on top of the common-data symbol. This superposing of fresh pilots creates repeated points overlapping in the affine domain, as exemplarily shown in **FIG. 11****.** It is noted that the overlap of pilots and common data at indices *c*₁, 2*c*₁, ...occurs before transform from the affine domain to the frequency domain,. Hence, in the affine domain, there is already an overlap of pilots and common data allocated at affine subcarriers with indices greater than the guard interval subcarrier indices.

After the transform from the affine domain to the frequency domain, the common data spreads across all subcarriers and the pilots and the common data also overlap at the indices determined by the preconfigured factor *c*₁ of the affine waveform. As in the clean pilot method, the respective indices of the affine subcarriers are determined by the preconfigured factor. In this embedding of pilot + data, the data rate effectively increases. The private data is allocated in the frequency domain using OFDM.

**Fig. 11** illustrates on the left-hand side the respective allocation of the common data and the private data in their respective domain. The bottom part shows the allocation of the private data at subcarriers in the frequency domain. The single pilot signal is allocated at an affine subcarrier having *c*₁ - 1 as first index, which may be an index = 0. The guard interval is indicated by the grey rectangular and is allocated at affine subcarriers, whose indices are greater than *c*₁ - 1. Hence, the guard interval is placed to the right of the single pilot. As illustrated in **FIG. 11****,** the guard interval may extend over multiple affine subcarriers corresponding to a length G of the guard interval. After the guard interval, the common data are positioned at indices of the affine subcarriers that are greater than the indices of the affine subcarriers of the guard interval. This ensures non-interference between the single pilot and the common data. It is noted that at some of the affine subcarriers of the common data, there are also pilot signals overlapping with respective common data at these affine subcarriers. As discussed before, these pilots are superposed to the common data and are allocated at indices of affine subcarriers having an index of a multiple of the affine scaling factor *c*₁, namely 2*c*₁, 3*c*₁, .... This pilot superposition results in an overlap of pilots and common data already in the affine domain. After transform from the affine domain into the frequency domain, this overlap translates into the frequency domain, as shown in the middle part of **FIG. 11****.** It is noted that transmitting the common data using a higher power that the power used for transmitting the private data applies also for the embedding method pilot + data (not illustrated on the left-hand side of **FIG. 11****).**

The right-hand side of **FIG. 11** illustrates summing the signals, when transmitted over the air, but remain distinguishable due to the power difference between the common and private data. Specifically, in the affine domain, the private data appear at subcarriers lying within the guard interval. In turn, in the frequency domain, besides the private data, also the common data appear at subcarriers allocated for the guard interval.

### Over the air

### 1. AFDM to OFDM (Frequency domain):

As **FIG. 10** and **FIG. 11** illustrate, the data carrying the common and private data may be summed either in frequency or in the affine domain. Hence, to analyze the AFDM signal which carries the common data in the frequency domain, in the following, the discrete-time AFDM signal is presented, using the Discrete Fourier Transform (DFT).

The frequency domain representation of AFDM signal can be given by: ${X}_{f}^{AFDM} \left(m\right) = {\sum }_{n = 0}^{N - 1} {s}^{AFDM} \left(n\right) {e}^{- j 2 π \left(\frac{nm}{N}\right)}$ ${X}_{f}^{AFDM} \left(m\right) = \frac{\sqrt{{φ}_{1}}}{\sqrt{N}} {\sum }_{n = 0}^{N - 1} {\sum }_{i = 0}^{N - 1} {X}^{AFDM} \left(i\right) {e}^{j 2 π \left({c}_{1}{n}^{2}+ni/N+{c}_{2}{i}^{2}\right)} {e}^{- j 2 π \left(\frac{nm}{N}\right)}$ where *n* refers to a time instance (possibly discrete) and *m* refers to an m-th subcarrier. After simplification, ${X}_{f}^{AFDM} \left(m\right)$ can be given by: ${X}_{f}^{AFDM} \left(m\right) = \frac{\sqrt{{φ}_{1}}}{\sqrt{N}} {\sum }_{i = 0}^{N - 1} {X}^{AFDM} \left(i\right) {e}^{j 2 π \left({c}_{2}{i}^{2}\right)} {\sum }_{i = 0}^{N - 1} {e}^{j 2 π \left(\frac{{c}_{1} {Nn}^{2} + n \left(i-m\right)}{N}\right)} .$

Focusing on the 2^{nd} term ${\sum }_{n = 0}^{N - 1} {e}^{j 2 π \left(\frac{{c}_{1} {Nn}^{2} + n \left(i-m\right)}{N}\right)}$, this term can be written as ${\sum }_{n = 0}^{N - 1} {e}^{j 2 π \left({c}_{1}{n}^{2}\right)} {e}^{j 2 π \left(\frac{ni}{N}\right)} {e}^{- j 2 π \left(\frac{nm}{N}\right)} .$

By setting ${c}_{1} = \frac{{c}_{1}^{′}}{2 N}$ such that ${c}_{1}^{′}$ is an integer power of 2, the above last expression can be written as ${\sum }_{n = 0}^{N - 1} {e}^{{jπc}_{1}^{′} \left(\frac{{n}^{2}}{N}\right)} {e}^{- j 2 π \left(\frac{nm}{N}\right)} {e}^{j 2 π \left(\frac{ni}{N}\right)} .$

This is exactly the Fourier transform of a chirp signal with slope ${c}_{1}^{′}$. Denoting ${c}_{1}^{′}$ as chirp slope and choosing $N = {c}_{1}^{′} M$*,* with *M* being a power of 2 number, the above expression may be cast into a form compatible with the FFT. Specifically, with this choice, the term ${e}^{{jπc}_{1}^{′} \left(\frac{{n}^{2}}{N}\right)}$ corresponds to a Fourier transform of a repeated chirp ${s}^{chirp} \left(p\right) = {e}^{jπ \frac{{p}^{2}}{M}}$, where *p* = 0, ... , *M* - 1 with an added frequency shift *i*. Its output can be written as ${\sum }_{n = 0}^{N - 1} {s}^{chirp} \left({\left[n\right]}_{M}\right) {e}^{j 2 π \left(\frac{ni}{N}\right)} {e}^{- j 2 π \left(\frac{nm}{N}\right)} .$

Setting *n* = *p + cM* where $c = 0 , … , {c}_{1}^{′} - 1$ ${\sum }_{c = 0}^{{c}_{1}^{′} - 1} {\sum }_{p = 0}^{M - 1} {s}^{chirp} \left(p\right) {e}^{j 2 π \left(\frac{\left(p+cM\right) i}{N}\right)} {e}^{- j 2 πm \left(p+cM\right) / N} ,$ which can be simplified to ${\sum }_{c = 0}^{{c}_{1}^{′} - 1} {e}^{j 2 π \frac{\left(i-m′{c}_{1}^{′}\right) c}{{c}_{1}^{′}}} {\sum }_{p = 0}^{M - 1} {e}^{jπ \frac{{p}^{2}}{M}} {e}^{j 2 π \frac{\left(\frac{i}{{c}_{1}^{′}}\right) p}{M}} {e}^{- j 2 π \frac{m ′ p}{M}} ,$ where $m ′ {c}_{1}^{′} = m$ and *m'* = 0, ... , *M -* 1, therefore the 1^{st} term ${\sum }_{c = 0}^{{c}_{1}^{′} - 1} {e}^{j 2 π \frac{\left(i-m′{c}_{1}^{′}\right) c}{{c}_{1}^{′}}}$ is non-zero only and only if ${\left[i-m′{c}_{1}^{′}\right]}_{{c}_{1}^{′}} = 0$, which means that it is non-zero only if ${\left[i\right]}_{{c}_{1}^{′}} = 0$*.* Accordingly, the 1st term takes one of the values ${\sum }_{c = 0}^{{c}_{1}^{′} - 1} {e}^{j 2 π \frac{\left(i-m′{c}_{1}^{′}\right) c}{{c}_{1}^{′}}} = \left\{\begin{matrix}{c}_{1}^{′} , {\left[m\right]}_{{c}_{1}^{′}} = 0 and {\left[i\right]}_{{c}_{1}^{′}} = 0 \\ 0 , otherwise .\end{matrix}\right.$

The 2^{nd} term ${\sum }_{p = 0}^{M - 1} {e}^{jπ \frac{{p}^{2}}{M}} {e}^{j 2 π \frac{\left(\frac{i}{{c}_{1}^{′}}\right) p}{M}} {e}^{- j 2 π \frac{m ′ p}{M}}$ is the Fourier transform of a single chirp of rate $\frac{1}{M}$ shifted by ${e}^{j 2 π \frac{\left(\frac{i}{{c}_{1}^{′}}\right) p}{M}}$*.*

The final expression of the AFDM signal in the frequency domain can be given by: ${X}_{f}^{AFDM} \left(m\right) = \frac{\sqrt{{φ}_{1}}}{\sqrt{N}} {\sum }_{i = 0}^{N - 1} {X}^{AFDM} \left(i\right) {e}^{j 2 π \left({c}_{2}{i}^{2}\right)} {\sum }_{c = 0}^{{c}_{1}^{′} - 1} {e}^{j 2 π \frac{\left(i-m′{c}_{1}^{′}\right) c}{{c}_{1}^{′}}} {\sum }_{p = 0}^{M - 1} {e}^{jπ \frac{{p}^{2}}{M}} {e}^{j 2 π \frac{\left(\frac{i}{{c}_{1}^{′}}\right) p}{M}} {e}^{- j 2 π \frac{m ′ p}{M}} .$

For the i-th AFDM element we can write: ${X}_{f}^{AFDM , i} \left(m\right) = \left\{\begin{matrix}\frac{\sqrt{{φ}_{1}} {c}_{1}^{′}}{\sqrt{N}} {X}^{AFDM} \left(i\right) {e}^{j 2 π \left({c}_{2}{i}^{2}\right)} {e}^{- jπ \frac{{\left(m\right)}^{2}}{M}} {φ}^{i} \left(m\right) , & {\left[m\right]}_{{c}_{1}^{′}} = 0 and {\left[i\right]}_{{c}_{1}^{′}} = 0 \\ 0 , & otherwise ,\end{matrix}\right.$ where ${φ}^{i} \left(m\right) = {\sum }_{p = 0}^{M - 1} {e}^{- j 2 π {\left(p-m′\right)}^{2} / M} {e}^{j 2 π \frac{\left(\frac{i}{{c}_{1}^{′}}\right) p}{M}}$*.* Therefore, the AFDM signal is spread in the frequency domain such that each ${\left[i\right]}_{{c}_{1}^{′}} = 0$ will have a contribution at each ${\left[m\right]}_{{c}_{1}^{′}} = 0$ subcarrier. This is depicted in FIG. 10 and FIG. 11. The final equation that represents the common data and the private data in the frequency domain is represented as follows: ${S}_{f}^{Data} \left(m\right) = \frac{\sqrt{{φ}_{1}} {c}_{1}^{′}}{\sqrt{N}} {X}^{AFDM} \left(i\right) {e}^{j 2 π \left({c}_{2}{i}^{2}\right)} {e}^{- jπ \frac{{\left(m\right)}^{2}}{M}} {φ}^{i} \left(m\right) + \sqrt{{φ}_{2}} {X}^{OFDM} \left(m\right) .$

### 2. OFDM to AFDM (Affine domain):

In the case, the summed data signal shall be represented in the affine domain, the OFDM signal is to be analyzed in the Affine domain. For that purpose the Discrete Affine Fourier Transform (DAFT) is used. The OFDM private data can be transformed into the twisted time-frequency (TF) chirp domain as: ${X}_{affine}^{OFDM} \left(i\right) = {\sum }_{n = 0}^{N - 1} {s}^{OFDM} \left(n\right) {e}^{- j 2 π \left({c}_{1}{n}^{2}+{c}_{2}{i}^{2}+ni/N\right)}$ ${X}_{affine}^{OFDM} \left(i\right) = \frac{\sqrt{{φ}_{2}}}{\sqrt{N}} {\sum }_{n = 0}^{N - 1} {\sum }_{m = 0}^{N - 1} {X}^{OFDM} \left(m\right) {e}^{+ j 2 π \left(\frac{nm}{N}\right)} {e}^{- j 2 π \left({c}_{1}{n}^{2}+ni/N+{c}_{2}{i}^{2}\right)}$ ${X}_{affine}^{OFDM} \left(i\right) = \frac{\sqrt{{φ}_{2}}}{\sqrt{N}} {\sum }_{m = 0}^{N - 1} {X}^{OFDM} \left(m\right) {e}^{- j 2 π \left({c}_{2}{i}^{2}\right)} {\sum }_{n = 0}^{N - 1} {e}^{- j 2 π \left(\frac{{c}_{1} {Nn}^{2} + n \left(i-m\right)}{N}\right)}$ and given the same conditions on *n, m, i,* and *c*₁ as mentioned earlier, the last equation is then written as: ${X}_{affine}^{OFDM , m} \left(i\right) = \left\{\begin{matrix}\frac{\sqrt{{φ}_{2}} {c}_{1}^{′}}{\sqrt{N}} {X}^{OFDM} \left(m\right) {e}^{- j 2 π \left({c}_{2}{i}^{2}\right)} {e}^{+ jπ \frac{{\left(m\right)}^{2}}{M}} \left({φ}^{i}\left(m\right)\right) * , & {\left[m\right]}_{{c}_{1}^{′}} = 0 and {\left[i\right]}_{{c}_{1}^{′}} = 0 \\ 0 , & otherwise ,\end{matrix}\right.$ where (*φⁱ*(*m*))* is the complex conjugate of *φⁱ*(*m*)*.* Hence, the OFDM signal is spread in the affine domain such that each ${\left[m\right]}_{{c}_{1}^{′} = 0}$ subcarrier will have a contribution at each ${\left[i\right]}_{{c}_{1}^{′} = 0}$ AFDM element, as depicted in **FIG. 10** and **FIG. 11****,** respectively. The final equation that represents the common data and the private data in the Affine domain is represented as follows: ${S}_{Affine}^{Data} \left(i\right) = \frac{\sqrt{{φ}_{2}} {c}_{1}^{′}}{\sqrt{N}} {X}^{OFDM} \left(m\right) {e}^{- j 2 π \left({c}_{2}{i}^{2}\right)} {e}^{+ jπ \frac{{\left(m\right)}^{2}}{M}} \left({φ}^{i}\left(m\right)\right) * + \sqrt{{φ}_{1}} {X}^{AFDM} \left(i\right) .$

As discussed above, a pilot signal and the common data are allocated to subcarrier in the affine domain (AFDM), while the private data are allocated to subcarriers in the frequency domain (OFDM). A guard interval may be further allocated to subcarriers in the affine domain to separate the pilot signal and the common data.

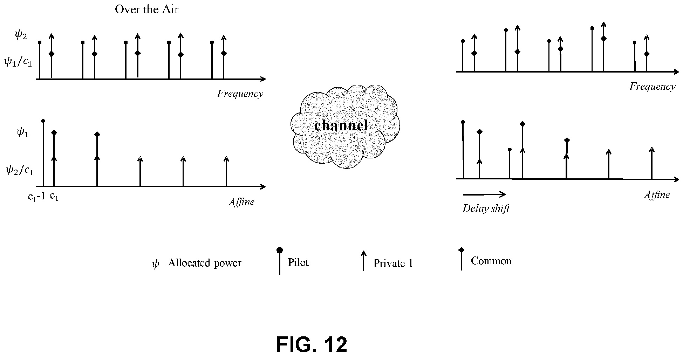

In the first method, a clean pilot is included in the affine domain with the common data. This pilot spreads in the frequency domain according to the preconfigured factor *c*₁ of the affine waveform, even after passing through the channel as shown in **FIG. 12****,** ensuring separation from the private data. The right-hand side of **FIG. 12** represents the signal received by an RSMA receiver, when the received signal is represented in the frequency domain or affine domain, respectively. When the signal propagates over the air, a delay shift may occur due to differences in the propagation characteristics of the subcarrier frequencies. The power difference between the common and private data further distinguishes them. Channel estimation and equalization can be performed in either the affine or frequency domain, enabling accurate decoding.

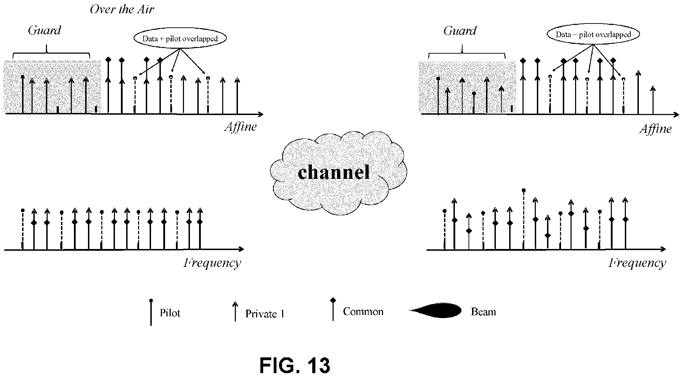

In the second method, pilots are embedded alongside the common data in the affine domain, with guard intervals separating resources, as shown in **FIG. 13****.** Here, the common data and pilots share the same affine subcarriers having indices larger than the indices of the affine subcarriers allocated for the guard interval. The common data and pilots spread across the frequency domain. After propagation over the channel, estimation starts in the affine domain, followed by equalization in both the affine and frequency domains. This method increases the data rate by utilizing overlapping resources efficiently.

After the common data and the private data are transmitted over the wireless channel using the respective first waveform (AFDM) and second waveform (OFDM), a signal that includes the common data and the private data may be received by an RSMA receiver having a similar exemplary implementation, as the transmitter part of **FIG. 7****.** Accordingly, the received signal may be viewed as a being a composition of the first waveform and the second waveform (e.g. AFDM waveform and OFDM waveform are superposed). As noted before, both the transmitter and the receiver may be preconfigured on which of the first waveform or second waveform to use for decoding the received signal. For decoding, information on the channel characteristics is needed. The channel information on the wireless channel, over which the common and private data have been transmitted may be obtained using the first waveform and/or the second waveform. The channel information may refer to wireless channel parameters that are needed for signal recovery and decoding, so as to obtain the original data (or an estimate thereof). These channel parameters may include, for example, the channel impulse response (in either the affine or frequency domain), the channel gain or attenuation at specific subcarrier indices, the delay spread (in the case of time-dispersive channels), and the Doppler shift or Doppler spread (in doubly-dispersive scenarios). These parameters may be obtained during the estimation phase by leveraging the known pilot symbols embedded in the transmitted waveform. The present disclosure uses the above-discussed two methods of pilot embedding for decoding. Thereby, the waveform used by the receiver may determine whether the channel information is obtained in the affine domain or the frequency domain. This will be detailed further below. Based on the channel information, the common data and the private data may be determined from the received signal, and the data may be obtain by combining the common data and the private data.

**FIG. 9** shows an exemplary flowchart for wireless reception of data according to the present disclosure. In step 910, a signal that includes the common data and the private may be received of a wireless channel. The common data may have been transmitted using a first waveform. The first waveform may be an Affine Frequency Division Multiplexing, AFDM, waveform. The private data may have been transmitted using a second waveform that differs from the first waveform. The second waveform may be an Orthogonal Frequency Division Multiplexing, OFDM, waveform. Using the first waveform and/or the second waveform, channel information of the wireless channel may be obtained (step 920). In step 930, the common data and the private data may be determined from the received signal, based on the channel information. By combining the determined common data and the private data, the data may be obtained.

The common data may have been modulated with a first power and the private data may have been modulated with a second power lower than the first power, by which the common data and the private data may be further distinguished in addition to their different first and second waveform used for transmission. Based on the first power and the second power, the common data and the private data may be demultiplexed from the received signal (e.g. on the presumption that the common data and the private data have been multiplexed based on the first power and second power at the transmitter side).

According to the present disclosure, the received signal may include a pilot signal that has been allocated at one of the affine subcarriers that has a first index lower than the preconfigured factor *c*₁. The common data may have been allocated at the affine subcarriers in the affine domain, with the affine subcarriers having respective indices that are determined by the preconfigured factor *c*₁. As noted before, the factor *c*₁ is one of AFDM parameters and determines the spread of the pilot and common data in the frequency domain. In turn, the private data may have been allocated at subcarriers in the frequency domain.

In which domain (affine or frequency) the receiver obtains the channel information may depend on the waveform being used (preconfigured) and/or the expected channel conditions. Hence, the selection of the transform domain may not be performed dynamically at the receiver. Instead, the receiver may be preconfigured to process the received signal in a specific domain, based on the system design and expected channel conditions. For example, in cases where the communication scenario is known to involve doubly dispersive channels (e.g., high-mobility users), the system and/or the transmitter and the receiver may be configured to use the affine domain due to its robustness to delay and Doppler spread. Conversely, in more static or frequency-selective environments, the frequency domain (OFDM) may be used. Thus, the transform domain may be determined prior to the channel estimation. It is noted that the transform domain refers to the domain the receiver transforms the received signal to by performing a respective transform processing. This may include taking into account also, at which indices of the affine subcarriers the pilot signal(s) is allocated. Accordingly, the receiver may not require detection whether the wireless channel is single dispersive or doubly dispersive in real time. Rather, the domain selection may be done at the system design or configuration stage, depending on the communication environment. Hence, a domain choice for channel estimation may be made based on the deployment scenario.

in this disclosure, two typical channel conditions are considered, namely a channel that causes only a delay in the received signal (singly dispersive) and a channel that causes a delay and Doppler shift (doubly dispersive), which may be further specified as follows:
- A **singly dispersive channel** is a communication channel that experiences dispersion in only one domain -- either *time* or *frequency*, but not both.
   There are two types of singly dispersive channels
   - *Time-Dispersive Channels -* These channels introduce delay spread, meaning signals arrive at different times due to multipath propagation. This can cause inter-symbol interference (ISI), affecting signal clarity.
   - *Frequency-Dispersive Channels* - These channels experience Doppler spread, where frequency shifts occur due to motion between the transmitter and receiver. This can lead to inter-carrier interference (ICI) in systems like OFDM.
- A **doubly dispersive channel** is a type of wireless communication channel that experiences both time dispersion (delay spread) and frequency dispersion (Doppler spread). This means that:
   - *Delay spread* occurs due to multipath propagation, where signals take different paths to reach the receiver, causing inter-symbol interference (ISI).
   - *Doppler spread* happens when the transmitter, receiver, or surrounding objects are moving, leading to frequency shifts that affect signal integrity.

### Channel:

In the following, it is assumed that the channel is an *L* tap channel through which the signals pass through. An L-tap channel refers to a multipath fading channel model that is represented using L discrete taps in a tapped delay line model. Each tap corresponds to a distinct propagation path with a specific delay and attenuation. An *L* tap channel has the following key Features:
- *Multipath Components -* The channel consists of L different paths, each contributing to the received signal.
- *Delay Spread* - Each tap introduces a different delay, modeling the effects of multipath propagation.
- *Fading Characteristics -* The taps can be associated with Rayleigh or Rician fading, depending on the environment.
- *Channel Impulse Response* - The channel is represented as a sum of L weighted impulses, where each impulse corresponds to a tap.

Accordingly, an *L* tap channel may be modeled as follows: $h \left(n\right) = {\sum }_{i = 0}^{L - 1} {h}_{i} {e}^{- \frac{j 2 {πk}_{i} \left(n-{l}_{i}\right)}{N}} δ \left(n-{l}_{i}\right) ,$ where *L* is the maximum number of multi-path component (MPC) in the environement, *hᵢ* , *lᵢ , kᵢ* refer to the i-th channel gain, the i-th delay and the i-th Doppler, respectively. As before, n refers to a time instance (possibly discrete). Therefore, the presence and the abscence of Doppler may require different process, as they apply to the two methods of pilot embedding discussed before.

### Case 1 -- Only Delay:

In the case of only delay in the environment (singly dispersive), the channel equation can be represented by making all *kᵢ* = 0 as follows: $h \left(n\right) = {\sum }_{i = 0}^{L - 1} {h}_{i} δ \left(n-{l}_{i}\right) ,$ where each *lᵢ* will introduce a phase in the frequency domain and a shift with ${c}_{1}^{′} {l}_{i}$ in the affine domain. A Doppler-free channel refers to a communication channel where Doppler shifts-caused by relative motion between the transmitter and receiver -- are negligible or completely absent. This typically occurs in scenarios where:
- Both the transmitter and receiver are stationary.
- The propagation medium is highly stable, such as in fiber-optic communication.
- The signal operates at extremely low frequencies, where Doppler effects are minimal.

Low frequencies means that the respective wavelength is extremely large. In the example considered here, setting *kᵢ* = 0 for all the multi-paths means that their respective wavelength *λᵢ* is much larger than the distance the signal propagated along the i-th path. Such distance *dᵢ* may be given in account of the i-th delay by *dᵢ* = *c*(*n* - *lᵢ*)*,* with *c* being the speed of light in vacuum.

Accordingly, when *λᵢ* ≫ *c*(*n* - *lᵢ*) translating into 1 ≫ *c*(*n* - *lᵢ*)/*λ*ᵢ, the term ${e}^{- \frac{j 2 {πk}_{i} \left(n-{l}_{i}\right)}{N}} \approx 1$, leading to the above simplified L tap channel.

After passing through the channel, the received signal *Y*(*m*) in the frequency domain at the m-th subcarrier is the product of the transmitted signal ${S}_{f}^{Data} \left(m\right)$ (carrying the common and private data and the pilot) and the channel frequency response *H*(*m*), represented as follows: $Y \left(m\right) = {S}_{f}^{Data} \left(m\right) \times H \left(m\right) .$

Substitute ${S}_{f}^{Data} \left(m\right)$ and *H*(*m*): $Y \left(m\right) = {\sum }_{i = 0}^{L - 1} {h}_{i} \left[\frac{\sqrt{{φ}_{1}} {c}_{1}^{′}}{\sqrt{N}} {X}^{AFDM}\left(i\right) {e}^{j 2 π \left({c}_{2}{i}^{2}\right)}{e}^{- jπ \frac{{\left(m\right)}^{2}}{M}} {φ}^{i}\left(m\right)+\sqrt{{φ}_{2}} {X}^{OFDM}\left(m\right)\right] {e}^{- \frac{j 2 {πml}_{i}}{N}}$ $\begin{matrix}Y \left(m\right) = \frac{\sqrt{{φ}_{1}} {c}_{1}^{′}}{\sqrt{N}} {\sum }_{i = 0}^{L - 1} {h}_{i} {X}^{AFDM} \left(i\right) {e}^{j 2 π \left({c}_{2}{i}^{2}\right)} {e}^{- jπ \frac{{\left(m\right)}^{2}}{M}} {φ}^{i} \left(m\right) {e}^{- \frac{j 2 {πml}_{i}}{N}} \\ + \sqrt{{φ}_{2}} {\sum }_{i = 0}^{L - 1} {h}_{i} {X}^{OFDM} \left(m\right) {e}^{- \frac{j 2 {πml}_{i}}{N}}\end{matrix}$

Hence, after passing through the channel with only delays, the received signal in frequency domain shows that no shifts of the subcarriers, respectively, their indices will occur. This means that the data allocation used at the transmitter will remain the same on the receiver side. In contrast, in the Affine domain, a shift of the subcarrier indices will occur from *i* to $i - {c}_{1}^{′} {l}_{i}$*,* where the received signal can be written as: $\begin{matrix}{Y}_{Affine}^{Data} \left(i\right) = {\sum }_{i = 0}^{L - 1} {h}_{i} \frac{\sqrt{{φ}_{2}} {c}_{1}^{′}}{\sqrt{N}} {X}^{OFDM} \left(m\right) {e}^{- j 2 π \left({c}_{2}{\left(i-{c}_{1}^{′}{l}_{i}\right)}^{2}\right)} {e}^{+ jπ \frac{{\left(m\right)}^{2}}{M}} {\left({φ}^{\left(i-{c}_{1}^{′}{l}_{i}\right)}\left(m\right)\right)}^{∗} \\ + \sqrt{{φ}_{1}} {X}^{AFDM} \left(i-{c}_{1}^{′}{l}_{i}\right) .\end{matrix}$

### Receiver method 1

Since the channel introduced only a phase in frequency domain, the channel can be estimated there using: $\hat{H} \left(m\right) = \frac{Y \left(m\right)}{X \left(m\right)} , {\left[m\right]}_{{c}_{1}^{′}} = 0 .$

Then, by any type of interpolation, the full channel information can be obtained by estimation and used to equalize the data and then decode them.

Similarly, since the channel caused a shift in the affine domain by ${c}_{1}^{′} {l}_{i}$*,* the allocated pilot at ${c}_{1}^{′} =$ 0 (first index) will be shifted to $i = {c}_{1}^{′} {l}_{i}$*.* Accordingly, the delay shifts and channel coefficients can be estimated from the values at the indices ${\left[i\right]}_{{c}_{1}^{′}} = 0$ that are larger than a threshold. Moreover, the estimated channel information will be used to equalize data in the Affine domain.

It is noted that, since the channel information can be estimated from frequency or affine domain, equalizing the data in one of the domains is sufficient to equalize the data in the other domain (OFDM data equalized in Affine domain can be directly transformed to frequency domain and extracted and vice versa).

### Receiver method 2

Since, the pilots in the frequency domain are mixed with AFDM data, it may be easier to estimate the channel in the Affine domain. After that, the AFDM signals are equalized in the affine domain, where the common data can be correctly decoded, and the OFDM signals are equalized in the frequency domain, where distortions may be easier to correct, so that the private data can more easily be decoded. This method ensures that both signals are processed in the most suitable way, making them easier to separate and decode accurately.

### Case 2 -- Delay and Doppler:

In the case of a doubly dispersive channel, where both delay and Doppler shifts affect the signal, either for the clean pilot embedding (method 1) or the pilot+data embedding (method 2), estimating the channel in the affine domain instead in the frequency domain may be more suitable, because both types of distortions can be handled naturally in the affine domain. This may be attributed to the affine domain accurately representing the time delays and frequency shifts, making the channel estimation more reliable and accurate. After estimation, AFDM signals should be equalized in the affine domain to correctly decode the common data in the affine domain, and the OFDM signal should be equalized in the frequency domain to also decode the private data.

By employing power-level differentiation and domain-specific processing, this method eliminates the reliance on SIC, addressing its associated challenges such as error propagation and decoding latency.

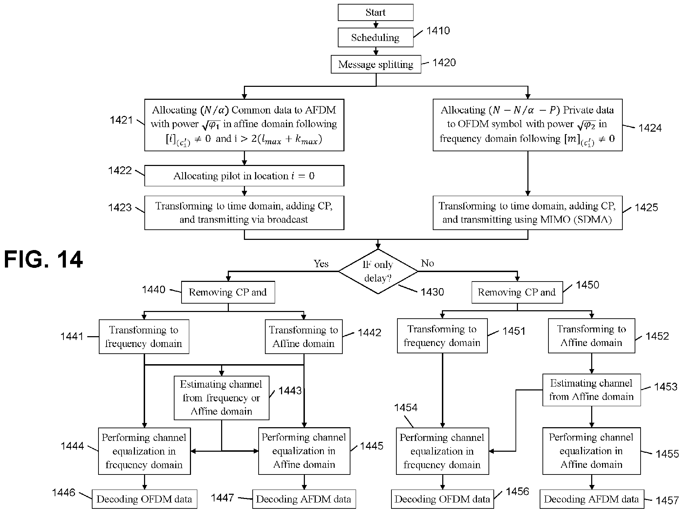

**FIG. 14** shows an exemplary flowchart of the method of the present disclosure, which entails steps performed by the transmitter and the receiver, respectively, for the case of the clean pilot embedding (method 1). The steps 1410 through 1457 may be performed by a hybrid AFDM-OFDM system, which entails a respective hybrid AFDM-OFDM transmitter and a hybrid AFDM-OFDM receiver. Such hybrid AFDM-OFDM transmitter may have a configuration, such as the exemplary RSMA transmitter shown in **FIG. 7****.** As noted before, the hybrid AFDM-OFDM receiver may be configured in a similar manner as the exemplary RSMA transmitter of **FIG. 7****,** but with respective units for decoding the common AFDM data and the private OFDM data for multiple users. For bi-directional communication between, for example, a base station and multiple users (e.g. UEs, terminals, etc.), each communication apparatus may be a hybrid AFDM-OFDM RSAM transceiver, performing processing to transmit and receive data using a first waveform and a second waveform according to the present disclosure. Accordingly, the processing steps 1410 to 1426 may be performed by the transmitter part of the transceiver, while steps 1440 to 1457 may be performed by the receiver part of the transceiver.

The receiver steps 1440 to 1457 reflect the various options for the receiver to obtain the channel information in either the frequency domain of affine domain, so as to determine the common data and the private data in the respective domain, once the data are equalized in one of the affine domain or frequency domain.

The processing at the transmitter side has been already discussed above and will be repeated here. The processing may start with scheduling the data of multiple users to the system in step 1410, followed by splitting the data (e.g. messages of users) of each user into a common data and private data (step 1420). The common data of multiple users may be combined into combined common data, referred to as common data for simplicity.

The common data may be allocated at affine subcarriers in the affine domain. The affine subcarriers may have respective indices that are determined by a preconfigured factor of the affine waveform. In the example of **FIG. 14****,** these subcarrier indices are referred to as ${\left[i\right]}_{\left({c}_{1}^{′}\right)} \neq 0$*,* with *i* > (*lₘₐₓ* + *kₘₐₓ*). The index *lₘₐₓ* refers to an index of the maximum discrete delay (in affine-domain samples) over all channel paths and *kₘₐₓ* is an index of the maximum Doppler-shift (in affine-domain samples) over all paths, respectively. By choosing index *i* > (*lₘₐₓ* + *kₘₐₓ*), it may be ensured that neither delay nor Doppler spreading from any of the multi-paths contaminates the "clean" common-data subcarriers. The common data may be allocated to a number of *N*/*α* subcarriers in the affine domain among a total number of *N* subcarriers. These *N*/*α* subcarriers may have respective indices i that satisfy the above restriction of ${\left[i\right]}_{\left({c}_{1}^{′}\right)} \neq 0$*,* with *i* > (*lₘₐₓ* + *kₘₐₓ*). Specifically, the common data may be allocated to non-zero indices. The subscript ${c}_{1}^{′}$ indicates that the subcarrier index depends on the parameter *c*₁ of the affine waveform, with *c*₁ being the preconfigured factor. The common data may be allocated with a first power $\sqrt{{φ}_{1}}$ (step 1421). In step 1422, a pilot signal may be allocated at one subcarrier having a first index that is lower than the preconfigured factor *c*₁. For example, the pilot signal may be allocated to an affine subcarrier index = 0, which is lower than the affine subcarrier indices ${\left[i\right]}_{\left({c}_{1}^{′}\right)} \neq 0$ to which the common data are allocated. Accordingly, the common data and the embedded pilot are nonoverlapping in the affine domain. This may be referred to as clean pilot, since the pilot signal and the common data are separated in the affine domain. The part of the signal carrying the common data is transformed to the time domain and a cyclic prefix CP is added, followed by transmitting the respective signal component part via broadcast (step 1423).

The private data may be allocated to subcarriers in the frequency domain, meaning said allocation refers to OFDM symbols. In the example of **FIG. 14****,** the private data are allocated at respective subcarriers having non-zero indices ${\left[m\right]}_{\left({c}_{1}^{′}\right)} \neq 0$. Since the common data are allocated at a fraction 1/*α* of *N* subcarriers, a fraction (1 - 1/*α*) of the *N* subcarriers remain to which the private data may be allocated. As noted before, the private data are allocated at OFDM subcarriers in the frequency domain, which include allocation of pilot signals at OFDM subcarriers. Hence, in case of a number of *P* pilot tones being reserved for the OFDM; symbol for channel estimation, a number of (*N - N*/*α - P*) subcarriers remain in the frequency domain to which the private data may be allocated (step 1424). *P* may be a positive integer equal to or larger than 1 and refers to the number of dedicates pilot subcarriers in each OFDM symbol. In the example of **FIG. 14****,** the number of (*N - N*/*α - P*) subcarriers have indices according to ${\left[m\right]}_{\left({c}_{1}^{′}\right)} \neq 0$. Further, the private data may be allocated with a second power $\sqrt{{φ}_{2}}$ that is lower than the first power $\sqrt{{φ}_{1}}$ used for allocating the common data. In step 1425, the part of the signal carrying the private data is transformed to the time domain and a cyclic prefix CP is added, followed by transmitting the respective signal component part via multiple antennas MIMO / SDMA.

The common data and the private data may be multiplexed in the power domain in accordance with the first power and the second power (not shown as separate step in **FIG. 14****).** Such a step may be part of the next step 1430 or may be a separate step after the transmitting steps 1424 and 1426, but before step 1430.

In step 1430, it may be determined whether the wireless channel is and/or is expected to be singly dispersive or doubly dispersive, which, in turn, determines the domain in which the channel information and channel equalization may be performed. As noted before, for example, in cases where the communication scenario is known to involve doubly dispersive channels (e.g., high-mobility users), the system and/or the transmitter and the receiver may be configured to use the affine domain due to its robustness to delay and Doppler spread. Conversely, in more static or frequency-selective environments, the frequency domain (OFDM) may be used. Thus, the transform domain may be determined prior to the channel estimation. It is noted that the transform domain refers to the domain the receiver transforms the received signal to by performing a respective processing. This may include taking into account also, at which indices of the affine subcarriers the pilot signal(s) is allocated, including whether pilot signal(s) overlap with the common data in the affine domain. Accordingly, the *"IF"* condition in step 1430 governs which domain's pilot extraction method is applied, based on the pre-selected waveform used at the transmitter. The receiver may not need to detect the channel type on its own, but follows the processing path associated with the received waveform, as detailed below.

If, in step 1430 of **FIG. 14****,** the wireless channel is expected to suffer from delay only (singly dispersive: step 1430: Yes), the cyclic prefix CP is first removed from the received signal (step 1440), which is performed in the time domain. In order to decode the common data and the private data from the received signal, the channel information may be determined in a first domain that is one of the frequency domain or in the affine domain. Accordingly, the received signal may be transformed in a first domain that is one of the affine domain or the frequency domain (step 1441 or step 1442). This transform provides for a domain transformed signal that is used for estimating the channel information. In **FIG. 14****,** the received signal may be transformed to the frequency domain (step 1441) or affine domain (step 1442) providing for the domain transformed signal.

When the first domain is the affine domain, the channel information may be estimated based on the domain transformed signal (step 1442 -- affine domain) and on the pilot signal that was allocated at an affine subcarrier, whose index is lower than the preconfigured factor *c*₁. This processing part is indicated in **FIG. 14** by the arrow connecting step 1442 and step 1443. In step 1443, the channel information is then estimated in the affine domain, taking the domain transformed signal as input carrying one pilot signal at affine subcarrier with index *c*₁ - 1. The respective clean pilot insertion is illustrated in **FIG. 10****.**

When the first domain is the frequency domain, the channel information may be estimated based on the domain transformed signal (step 1441 -- frequency domain) and on multiple frequency domain pilot signals. This processing part is indicated in **FIG. 14** by the arrow connecting step 1441 and step 1443. In step 1443, the channel information is then estimated, but now in the frequency domain. These frequency domain pilot signals are replica of the one pilot signal inserted in the affine domain at a subcarrier with index *c*₁ - 1. Further, these frequency domain pilot signals are spread in the frequency domain at orthogonal subcarriers that are determined by the preconfigured factor *c*₁. This spread of the pilot signals in the frequency domain is illustrated in **FIG. 10****,** where the pilot replica overlap with the private data at respective orthogonal subcarriers.

The estimated channel information may be directly used equalize the channel by correcting the received signal in the frequency domain in step 1444 and affine domain in step 1445. It is noted that, since the common data are allocated to subcarriers in the affine domain and the private data are allocated to subcarriers in the frequency domain, the received signal still needs to be transformed into one of the affine domain or frequency domain that is different from the first domain. This provides for a transformed signal. For example, if the domain transformed signal used for channel estimation is in the affine domain, said transformed signal is in the frequency domain, and vice versa. In **FIG. 14****,** the channel is equalized in the frequency domain in step 1444 and is equalized in the affine domain in step 1445, where the respective transformed received signal (i.e. the domain transformed signal and the transformed signal) is corrected. Based on the estimated channel information, the common data (AFDM data) are then decoded from the domain transformed signal in step 1447, and the private data (OFDM data) are decoded from the transformed signal in step 1446 (i.e. a signal obtained by transforming the received signal into one of the affine domain or frequency domain different from the first domain).

If, in step 1430 of **FIG. 14****,** the wireless channel is not expected to suffer from delay only (doubly dispersive: step 1430: No), the cyclic prefix CP is first removed from the received signal (step 1450), which is performed in the time domain. In order to decode the common data and the private data from the received signal, the channel information may be determined in the first domain that is the affine domain. As noted above, the affine domain may be more suitable to handle delay and Doppler effects, as opposed to the frequency domain. Accordingly, the received signal may be transformed in the affine domain being the first domain (step 1452). The subsequent processing is similar to the singly dispersive case, but are described in the following for completeness. In step 1453, the channel information may be estimated based on the domain transformed signal in the affine domain and on the pilot signal that was allocated at an affine subcarrier, whose index is lower than the preconfigured factor *c*₁. The estimated channel information may be directly used to equalize the channel in the affine domain (step 1455). The channel equalization results is a corrected domain transformed signal. Based on the channel information, the common data (AFDM data) is then decoded from the domain transformed signal in step 1457. Likewise, in order to equalize the channel in the frequency domain, the received signal may be transformed into the frequency domain (step 1451) and the respective transformed signal is equalized in the frequency domain (different from the first domain being here the affine domain), using the channel information estimated in the affine domain (step 1454). The private data may then be decoded from the (frequency domain) transformed signal in step 1456.

Even though the above discussed processing with reference to the flowchart of **FIG. 14** may be applicable for both the clean pilot embedding method and the pilot + data embedding method, it may be more suitable for the clean pilot embedding method, where there is no overlap of the pilot signal with the common data in the affine domain, still allowing for flexibility to perform estimating the channel information in the affine domain or frequency domain, depending on whether the wireless channel is singly or doubly dispersive.

The above-described method to estimate the channel information in one of the affine domain or frequency domain leverages the domain-specific processing and power differentiation to ensure robust separation and efficient signal recovery.

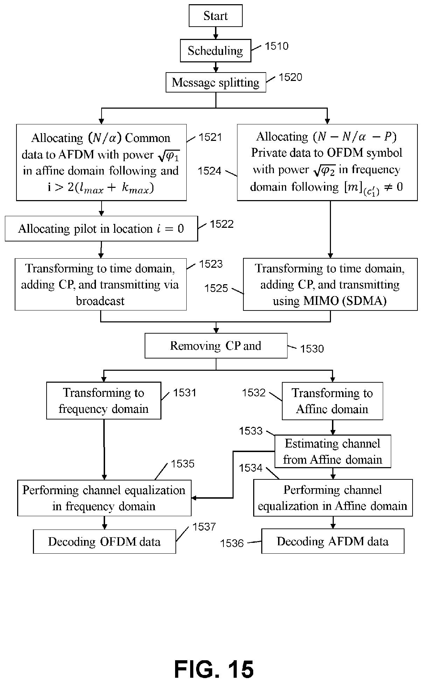

**FIG. 15** shows an exemplary flowchart of the method of the present disclosure, which entails steps performed by the transmitter and the receiver, respectively, for the case of the pilot+data embedding that includes a guard interval (method 2). As may be seen, the pilot+data embedding method entails similar processing steps to those of the clean pilot embedding method of **FIG. 14****.**

The steps 1510 through 1537 may be performed by a hybrid AFDM-OFDM system, which entails a respective hybrid AFDM-OFDM transmitter and a hybrid AFDM-OFDM receiver. Such hybrid AFDM-OFDM transmitter may have a configuration, such as the exemplary RSMA transmitter shown in **FIG. 7****.** As noted before, the hybrid AFDM-OFDM receiver may be configured in a similar manner as the exemplary RSMA transmitter of **FIG. 7****,** but with respective units for decoding the common AFDM data and the private OFDM data for multiple users. For bi-directional communication between, for example, a base station and multiple users (e.g. UEs, terminals, etc.), each communication apparatus may be a hybrid AFDM-OFDM RSAM transceiver, performing processing to transmit and receive data using a first waveform and a second waveform according to the present disclosure. Accordingly, the processing steps 1510 to 1525 may be performed by the transmitter part of the transceiver, while steps 1530 to 1536 may be performed by the receiver part of the transceiver.

The processing at the transmitter side has been already discussed above and will be repeated here. The processing may start with scheduling the data of multiple users to the system in step 1510, followed by splitting the data (e.g. messages of users) of each user into a common data and private data (step 1520). The common data of multiple users may be combined into combined common data, referred to as common data for simplicity.

The common data may be allocated at affine subcarriers in the affine domain. The affine subcarriers may have respective indices that are determined by a preconfigured factor of the affine waveform. In the example of **FIG. 15****,** these subcarrier indices have an index of *i* > (*lₘₐₓ* + *kₘₐₓ*). *lₘₐₓ* and *kₘₐₓ* represent the worst case dispersion, introduced by the wireless channel and are used to protect common data subcarriers from interference caused by multipath and Doppler effects. The index *lₘₐₓ* refers to the largest index of the discrete delay indices [*l*][ ][*i*][ ]*lᵢ* among all propagation paths and defines how far a transmitted symbol can be shifted in the affine domain due to multipath. Hence, *lₘₐₓ* represents the maximum delay spread, expressed in discrete time samples (i.e., sample indices relative to the affine transform's resolution). Similarly, *kₘₐₓ* refers to the largest index corresponding to the maximum Doppler shift, expressed in discrete frequency bins (i.e., frequency indices normalized to the affine transform domain). These discrete units reflect the resolution of the Discrete Affine Fourier Transform (DAFT) used in the system. The parameter *kₘₐₓ* thus captures the extent of the frequency dispersion caused by the relative motion (e.g., between transmitter, receiver, or scatterers), which leads to spreading in the affine domain. By allocating common data to affine subcarrier indices satisfying *i* > (*lₘₐₓ* + *kₘₐₓ*), it may be ensured that subcarriers having such indices i are free from any delay or Doppler interference. This may guarantee a "clean" allocation region for common data, similar to the clean pilot strategy. Specifically, the common data may be allocated to a number of *N*/*α* affine-domain subcarriers (out of a total of *N*), all satisfying the constraint *i* > (*lₘₐₓ* + *kₘₐₓ*)*.*

Specifically, the common data may be allocated to non-zero indices, which may be determined by the preconfigured factor *c*₁ of the affine waveform. The common data may be allocated with a first power $\sqrt{{φ}_{1}}$ (step 1521). In step 1522, a pilot signal may be allocated at a first affine subcarrier in the affine domain, having a first index. For example, the pilot signal may be allocated to an affine subcarrier having the index = 0. Further, a guard interval may be allocated at affine subcarriers, whose indices are greater than the first index at which the pilot is allocated (step not shown in **FIG. 15****).** It is noted that such steps of allocating the guard interval may be part of the allocation step 1521 or may be a separate allocation step before or after the pilot allocation step 1522, for example. The indices of affine subcarriers at which the common data are allocated may be greater than the indices of the affine subcarriers of the allocated guard interval. The part of the signal carrying the common data is transformed to the time domain and a cyclic prefix CP is added, followed by transmitting the respective signal component part via broadcast (step 1523).

The private data may be allocated to subcarriers in the frequency domain, meaning said allocation refers to OFDM symbols. In the example of **FIG. 15****,** the private data are allocated at respective subcarriers having non-zero indices ${\left[m\right]}_{\left({c}_{1}^{′}\right)} \neq 0$. Similar to the case of the "clean" pilot, since the common data are allocated at a fraction 1/*α* of *N* subcarriers, a fraction (1 - 1/*α*) of *N* subcarriers remain to which the private data may be allocated. As noted before, the private data are allocated at OFDM subcarriers in the frequency domain, which include allocation of pilot signals at OFDM subcarriers. Hence, in case of a number of *P* pilot tones being reserved for the OFDM; symbol for channel estimation, a number of (*N - N*/*α - P*) subcarriers remain in the frequency domain to which the private data may be allocated (step 1524). *P* may be a positive integer equal to or larger than 1 and refers to the number of dedicates pilot subcarriers in each OFDM symbol. In the example of **FIG. 15****,** the number of (*N - N*/*α - P*) subcarriers have indices according to ${\left[m\right]}_{\left({c}_{1}^{′}\right)} \neq$ 0. Further, the private data may be allocated with a second power $\sqrt{{φ}_{2}}$ that is lower than the first power $\sqrt{{φ}_{1}}$ used for allocating the common data. In step 1525, the part of the signal carrying the private data is transformed to the time domain and a cyclic prefix CP is added, followed by transmitting the respective signal component part via multiple antennas MIMO / SDMA.

As noted before, the common data and the private data may be multiplexed in the power domain in accordance with the first power and the second power (not shown as separate step in FIG. 15).

Upon reception of the signal that includes the common data transmitted using the AFDM waveform, the private data transmitted using the OFDM waveform, and the guard interval, the cyclic prefix CP is removed from the received signal in the time domain (step 1530). In order to decode the common data and the private data from the received signal, the channel information needs to be obtained. For that purpose, the received signal may be transformed in the affine domain (step 1532), providing for an affine domain transformed signal. Based on the affine domain transformed signal and on the pilot signal, the channel information is estimated in the affine domain (step 1533). In the affine domain, channel estimation is performed by leveraging the known structure of the pilot symbol, which is transmitted at a pre-defined affine subcarrier index. After applying the inverse affine transform to the received signal, the system isolates the received pilot component in the affine domain. The receiver then compares the received pilot value with the known transmitted pilot symbol and applies a least squares (LS) or correlation-based estimation method to estimate the affine domain channel response at that index. This channel response can then be extrapolated or interpolated across relevant indices to recover the full channel behavior. The use of a guard interval ensures that pilot contamination due to affine spreading is minimized, allowing clean extraction. It is noted that, in the pilot+data embedding method, the pilot also overlaps at affine subcarriers at which the common data are allocated. This overlap persist at the receiver side, when the signal is transmitted over the air. The overlap of pilot and the common data is illustrated in **FIG. 11** and **FIG. 13****,** respectively.

The estimated channel information may be directly used equalize the channel by correcting the received signal in the frequency domain in step 1535 and affine domain in step 1534. It is noted that, since the common data are allocated to subcarriers in the affine domain and the private data are allocated to subcarriers in the frequency domain, the received signal further needs to be transformed into the frequency domain in step 1531. This transform provides for a frequency-domain transformed signal. Then, the received signal is equalized in the frequency domain, using the frequency-domain transformed signal and the received signal is equalized in the affine domain, using the affine domain transformed signal (steps 1534 and 1535). Finally, based on the channel information, the common data (AFDM data) and the private data (OFDM data) are decoded from the (equalized) affine domain transformed signal and the frequency-domain transformed signal, respectively.

The above-described method to estimate the channel information ensures efficient utilization of resources, enhanced data rate, and robust signal separation through domain-specific processing.

The table below compares the conventional RSMA and the RSMA of the present disclosure in terms of transmitter (Tx) design complexity, receiver (Rx) design complexity, and practicality. In conventional RSMA, the transmitter relies on power domain NOMA, increasing design complexity, while the receiver requires SIC, which introduces challenges making it less practical for real-world applications. In contrast, the proposed RSMA adjusts power specifically for AFDM, simplifying transmitter design, and eliminates the need for SIC at the receiver, so that the computational overhead is reduced. The proposed approach of the present disclosure enhances system practicality, making it more feasible and efficient for deployment in modern communication systems.

| **Approach** | **Tx design complexity** | **Rx design Complexity** | **Practicality** |
|---|---|---|---|
| Conventional RSMA | Power domain NOMA | SIC is used | NO |
| Proposed RSMA | Power adjusted for AFDM | No SIC | YES |

**FIG. 2a** shows an exemplary block diagram of an apparatus 250 according to some exemplary embodiments, performing functions of wireless transmission of data of the present disclosure as discussed above. The apparatus may be a transmitter part of a hybrid AFDM-OFDM RSMA transceiver, such as the exemplary implementation shown in **FIG. 7****.** The apparatus may be referred to a transmitting apparatus, transmitting device, transmitter or the like, performing processing of common data and private data, along with their transmission using an AFDM waveform and an OFDM waveform, respectively.

The transmitting device 250 may be a part of any wireless communication device such as a station (STA) or access point (AP), or, in general base station (BS) or terminal (i.e. user equipment UE). The transmitting device 250 comprises memory 251, processing circuitry 252, and a wireless transceiver 253 (or a wireless transmitter 253), which may be capable of communicating with each other via a bus 255. The transmitting device 250 may further include a user interface 254. However, for some applications, the user interface 254 may not be necessary (for instance some devices for machine-to-machine communications or the like). The transmitting device 250 may be the transmitter Tx of the communication system CS in **FIG. 1****.**

The memory 251 (also referred to as storage) may store a plurality of firmware or software modules, which implement some embodiments of the present disclosure. The memory may 251 be read from by the processing circuitry 252. Thereby, the processing circuitry may be configured to carry out the firmware/software implementing the embodiments. The processing circuitry 252 may include one or more processors, which, in operation, prepare data for transmission. In particular, the circuitry 252 is configured to map sequential portions of the data onto respective modulation symbols according to a target modulation. In an implementation example, the target modulation is one of phase shift keying, PSK, pulse amplitude modulation, PAM, and quadrature amplitude modulation, QAM, but may not be limited to the target modulations listed. For example, amplitude phase shift keying (ASK) or frequency shift keying (FSK) may be also used to map sequential portions of the data onto respective modulation symbols according to ASK or FSK. A further option is to combine target modulations. As such it is understood, that the above-listed target modulations also cover their respective subsets. PSK, for example, covers BPSK, DPSK, M'ary PSK, QPSK, OQPSK etc.. FSK covers BFSK, M'ary FSK, MSK, GMSK etc.. ASK covers on-off keying, M'ary ASK etc.. QAM is commonly referred to as M'ary QAM covering rectangular QAM or circular QAM. The modulation symbols include a first modulation symbol and a second modulation symbol. In a particular exemplary implementation, BPSK or QPSK are used to generate the modulation symbols. Such lower-order modulations are robust and their application for pairing modulation may provide further improvement as discussed herein.

The processing circuitry 252 is configured to split the data into common data and private data. Accordingly, the processing circuitry may include circuitry implementing the unit Message splitter 720 of the RSMA transmitter of **FIG. 7****.** The wireless transceiver 253 is configured to transmit, over a wireless channel, the common data and the private data. The transceiver 253 is configured to transmit the common data using a first waveform being an Affine Frequency Division Multiplexing, AFDM, waveform, and to transmit the private data using a second waveform being an Orthogonal Frequency Division Multiplexing, OFDM, waveform different from the first waveform. The transmitting device may transmit the common data and the private data to a receiving device. **FIG. 2b** shows an exemplary block diagram of such receiving device 260.

Before passing the signal to an analog front including a single or multiple antennas, the transceiver may perform possibly further operations. Such further operations may include an inverse transformation such as the inverse fast Fourier transform (IFFT) or inverse discrete cosine transform (IDCT), in accordance with the desired (orthogonal or non-orthogonal) frequency division multiplex. Moreover, the transformed time-domain symbols may then be modulated onto the actual carrier, amplified or the like.

In an exemplary implementation, the transmitting operation of the transceiver 253 includes further orthogonal frequency division multiplex, OFDM, modulation of the carriers including carriers carrying the symbols of the signal. Alternatively, non-OFDM waveforms may be used for modulating the carriers that carry the respective symbols, which are transmitted using a single antenna. Alternatively, the symbols may be transmitted using multiple antennas. As discussed above, units for IFFT and FFT operations are applied to both the common data and the private data, as illustrated in the AFDM-OFDM transceiver in **FIG. 7** with respective units IFFT 722 and IFFT 733. For processing the common data and transmitting them using the AFDM waveform, further operations are needed to account for the first waveform, including ${Λ}_{{c}_{2}}^{H}$ operation in the affine domain and ${Λ}_{{c}_{1}}^{H}$ operation in the time domain. In general, the transmitting device may be multiple antennas for MIMO operation, allowing for broadcast and MIMO/SDMA transmission. The transceiver is configured to transmit the common data by broadcast to multiple users and to transmit the private data to specific users using multiple antennas (e.g. by performing beamforming for specific users).

As **FIG. 2a** shows, the memory 251 may be separated from the processing circuitry 252. However, this is only an example. In general, the memory 251 may be implemented within the processing circuitry 252, and e.g., within the one or more processors. The term "memory" refers to any type of long term, short term, volatile, nonvolatile, or other memory and is not to be limited to any particular type of memory or number of memories, or type of media upon which memory is stored. Thereby, the processing circuitry may be configured to carry out the firmware/software implementing the embodiments. The processing circuitry 252 may include one or more processors, which, in operation, determines data.

In some embodiments, the processing circuitry 252 performing the functions described herein may be integrated within an integrated circuit on a single chip. The processing circuitry may also implement a control function to control the transceiver 253 to receive a signal. The processing circuitry 252 may signal to transceiver 253, which of the first and second waveform to use to transmit the common data and the private data. The first waveform and/or the second waveform may be stored in memory 251. For example, the AFDM parameters c₁ and c₂ characterizing the AFDM waveform may be stored in memory 251. The processing circuitry may read the AFDM parameters from the memory and use them to perform processing ${Λ}_{{c}_{2}}^{H}$ and ${Λ}_{{c}_{1}}^{H}$*,* respectively.

The transceiver 253 is configured (e.g. by the processing circuitry) to receive a signal and obtain symbols carried therein. For example, the processing circuitry 262 may configure (control) the transceiver 263, over the bus 265, to receive the signal. The transceiver may be, for example, a wireless transceiver obeying some standard or some pre-defined rules in order to comply with the transmitter, e.g. the one described below with reference to **FIG. 2b****.** The wireless transceiver 253 may operate according some known resource multiplexing and/or multi-user multiplexing scheme. In general, any currently used scheme such as those employed in the IEEE 802.11 framework or in the 5G/6G framework are applicable. In particular, possible examples include the OFDM, OFDMA, or non-orthogonal multiple access (NOMA) or the like.

**FIG. 2b** shows an exemplary block diagram of an apparatus according to some exemplary embodiments, performing functions of wireless reception of data of the present disclosure as discussed above. The apparatus may be a receiver part of a hybrid AFDM-OFDM RSMA transceiver, such as the exemplary implementation shown in **FIG. 7****.** The apparatus may be referred to a receiving apparatus, receiving device, receiver or the like, performing processing of a received signal to decode therefrom the common data and private data.

The receiving device 260 may be a part of any wireless communication device such as a station (STA) or access point (AP), or, in general base station (BS) or terminal (i.e. user equipment UE). The receiving device 260 comprises memory 261, processing circuitry 262, and a wireless transceiver 263 (or a wireless receiver 263), which may be capable of communicating with each other via a bus 265. The receiving device 260 may further include a user interface 264. However, for some applications, the user interface 264 may not be necessary (for instance some devices for machine-to-machine communications or the like). The receiving device 260 may be the transmitter Rx of the communication system CS in **FIG. 1****.**

The memory 261 may store a plurality of firmware or software modules, which implement some embodiments of the present disclosure. The memory may 261 be read from by the processing circuitry 262. Thereby, the processing circuitry may be configured to carry out the firmware/software implementing the embodiments. The processing circuitry 262 may include one or more processors, which, in operation, determines data.

The processing circuitry 262 may perform functions, which may be integrated within an integrated circuit on a single chip. The processing circuitry may also implement a control function to control the transceiver 263 to receive the signal. The transceiver 263 is configured (e.g. by the processing circuitry) to receive a signal and obtain symbols carried therein. For example, the processing circuitry 262 may configure (control) the transceiver 263, over the bus 265, to receive the signal. The transceiver may be, for example, a wireless transceiver obeying some standard or some pre-defined rules in order to comply with the transmitter, e.g. the one described with reference to **FIG. 2a****.**

For example, wireless transceiver 263 is configured to receive a signal over a wireless channel, with the signal including the common data transmitted using a first waveform and the private data transmitted using a second waveform different from the first waveform. The first waveform may be an AFDM waveform and the second waveform may be an OFDM waveform. The receiving device 260 may receive the signal from transmitting device 250, with an exemplary block diagram being shown in **FIG. 2a****.**

The processing circuitry 262 is configured to obtain channel information of the wireless channel using the first waveform and/or the second waveform. As discussed above, the whether the AFDM waveform or both the AFDM and OFDM waveform is used to obtain the channel information may depend on the expected channel condition. The expected condition may be that the wireless channel is singly dispersive (e.g. delay only) or doubly dispersive (e.g. delay and Doppler). Based on the channel information, the processing circuitry determines the common data and the private data. The common data and the private data may be determined within the affine domain or frequency domain in accordance with the domain in which subcarriers have been allocated to the common data and the private data. Once the common and private data are determined, the processing circuitry obtains the data (i.e. the original data before splitting them) by combining the common data and the private data.

As **FIG. 2b** shows, the memory 261 may be separated from the processing circuitry 262. However, this is only an example. In general, the memory 261 may be implemented within the processing circuitry 262, and e.g., within the one or more processors. The term "memory" refers to any type of long term, short term, volatile, nonvolatile, or other memory and is not to be limited to any particular type of memory or number of memories, or type of media upon which memory is stored. Thereby, the processing circuitry may be configured to carry out the firmware/software implementing the embodiments. The processing circuitry 262 may include one or more processors, which, in operation, determines data. The processing circuitry 262 may signal to transceiver 263, which of the first and second waveform to use to decode the common data and the private data from the received signal. Specifically, processing circuitry 262 may signal to transceiver 263, whether to use the AFDM waveform and/or OFDM waveform to obtain the channel information. The first waveform and/or the second waveform may be stored in memory 261. For example, the AFDM parameters c₁ and c₂ characterizing the AFDM waveform may be stored in memory 251. The processing circuitry may read the AFDM parameters from the memory and use them to perform processing ${Λ}_{{c}_{2}}^{H}$ and ${Λ}_{{c}_{1}}^{H}$*,* respectively.

The present disclosure discusses and applies the principles of RSMA throughout the description, examples, and cases provided. Notably, the approach discussed above is equally applicable to NOMA design, where the need for SIC is removed employing the above methods and exemplary implementations, enabling flexible resource allocation. The allocation of the data will be depend on the case, for example, whether equidistant users share power and OFDM resources equally, while near and far users use overlapping and clean domains, respectively. The near user may benefit from stronger signal power, enhancing performance.

The present disclosure represents a novel and forward-looking approach to address multiple access challenges, particularly from a waveform domain perspective. By introducing the coexistence of AFDM and OFDM, the present disclosure establishes a new paradigm for managing multi-access in wireless communication systems. This strategy enhances the flexibility and efficiency of access methods, while aligning with the future vision of NGMA in 6G networks.

The above-described methods and apparatuses of the present disclosure are not limited to specific radio access technologies or network topologies, such as 4G, LTE, and Wi-Fi. The concepts and variations disclosed herein may be broadly applied across a wide range of communication technologies and network configurations. These include, but are not limited to, Bluetooth, ZigBee, 5G/New Radio (NR), Long-Term Evolution (LTE), LTE-Advanced, LTE-Advanced Pro, Internet of Things (IoT), Industrial Internet of Things (IIoT), and narrowband loT (NB-IoT). As a result, the disclosed methods and apparatuses may have applications in a wide range of industries and use cases, including consumer electronics, industrial automation, smart cities, healthcare, automotive, etc.. The scope of the present disclosure in its breadth may encompass a wide range of technology implementations and may not be limited by the discussed examples and exemplary implementations.

The approach of the present disclosure of using AFDM for the common part, transmitted with higher power, and OFDM for the private part, transmitted with lower power, represents a significant advancement in RSMA-based wireless communication systems as well as in the 6G waveform design perspective, where different waveforms coexist with each other. Accordingly, the present disclosure eliminates the reliance on SIC while addressing key challenges in current standards and aligns well with the goals of emerging wireless technologies, such as 5G and 6G. The essentiality of the above-discussed approach is highlighted through the following unique aspects:
- *Domain-Based power Decoding Without SIC:*
   The approach leverages distinct power levels and waveform domains (affine and frequency) to distinguish between common and private streams. This eliminates the need for SIC at the receiver, addressing challenges such as error propagation, CSI dependency, and decoding latency, which are prevalent in current RSMA systems.
- *Enhanced Receiver Simplicity and Compatibility*:
   By removing SIC, the design significantly reduces receiver complexity and improves compatibility of the receiver with the transmitter, supporting a wide range of applications and user scenarios, particularly in resource-constrained environments. This compatibility ensures that even simplified or resource-constrained receivers can reliably decode the transmitted data without requiring complex interference cancellation procedures.
- *Accurate Decoding Through Power-Level Differentiation*:
   By transmitting the common part using AFDM at higher power and the private part using OFDM at lower power, the approach ensures a clear separation of streams at the receiver. This enhances decoding accuracy by allowing signals to be distinguished based on power levels and waveform domains (affine for AFDM and frequency for OFDM). This design eliminates the complexities and errors associated with SIC, significantly improving overall system reliability.
- *Increased Throughput and Reliability*:
   By minimizing decoding errors and interference, the system supports higher data rates and ensures consistent performance across diverse network conditions, aligning with the goals of 5G and beyond.
- *Alignment with Multi-Domain Resource Optimization Goals*:
   The dual-domain (affine and frequency) separation supports 3GPP's emphasis on multi-user efficiency and resource optimization, while the approach's adaptability ensures its relevance to future 6G integrated sensing and communication (ISAC) applications.
- *Foundation for Integrated Sensing and Communication (ISAC)*:
   The use of AFDM and OFDM waveforms for distinct roles enables dual functionality, paving the way for ISAC solutions that integrate communication and sensing in a unified framework.

In summary, the present disclosure provides techniques and methods to perform wireless transmission and reception of data, which are split into common data and private data and transmitted over a wireless channel. The common data are transmitted using a first waveform that is an Affine Frequency Division Multiplexing, AFDM, waveform and the private data are transmitted using a second waveform that is an Orthogonal Frequency Division Multiplexing, OFDM, waveform different from the first waveform. Over the wireless channel, a signal is received that includes the common data and the private data. Using the first waveform and/or the second waveform, channel information of the wireless channel is obtained, and the common data and the private data are determined from the received signal, based on the channel information. By combining the common data and the private data, the data are obtained.

### Implementations in software and hardware

It is noted that although embodiments and examples of the present disclosure were provided in terms of an apparatus above, the corresponding method provides the functionality described by the apparatus are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting device 250 and the receiving device 260 may be stored as one or more instructions or code on a non-transitory computer readable storage medium. The computer-readable media includes physical computer storage media, which may be any available medium that can be accessed by the computer, or, in general by the processing circuitry 252 and 262, respectively. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

For example, the program code may cause the processing circuitry 252 and 262 (e.g. including one or more processors) to operate as a special purpose computer programmed to perform the techniques disclosed herein.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

### Selected embodiments and examples

According to an aspect, a method for wireless transmission of data is provided comprising steps of: splitting the data into common data and private data; and transmitting, over a wireless channel, the common data using a first waveform being an Affine Frequency Division Multiplexing, AFDM, waveform and the private data using a second waveform being an Orthogonal Frequency Division Multiplexing, OFDM, waveform different from the first waveform.

In an exemplary implementation, the method comprises a step of modulating the common data with a first power and the private data with a second power lower than the first power.

For example, the method comprises multiplexing the common data and the private data in power domain in accordance with the first power and the second power.

According to an exemplary implementation, the method further comprises: allocating the private data at subcarriers in the frequency domain; allocating the common data at affine subcarriers in the affine domain, wherein the affine subcarriers have respective indices determined by a preconfigured factor of the affine waveform; and allocating a pilot signal at one of the affine subcarriers having a first index being lower than the preconfigured factor.

According to another exemplary implementation, the method further comprises: allocating the private data at subcarriers in the frequency domain; allocating a pilot signal at a first affine subcarrier in the affine domain, the first affine subcarrier having a first index; allocating a guard interval at affine subcarriers whose indices are greater than the first index; and allocating the common data at affine subcarriers, whose indices are greater than the indices of the affine subcarriers of the allocated guard interval, wherein respective indices of the affine subcarriers are determined by a preconfigured factor of the affine waveform.

For example, the common data is transmitted by broadcast and the private data is transmitted using multiple antennas.

According to an aspect, a method for wireless reception of data is provided comprising steps of: receiving, over a wireless channel, a signal including i) common data transmitted using a first waveform being an Affine Frequency Division Multiplexing, AFDM, waveform and ii) private data transmitted using a second waveform an Orthogonal Frequency Division Multiplexing, OFDM, waveform different from the first waveform; obtaining channel information of the wireless channel using the first waveform and/or the second waveform; determining the common data and the private data from the received signal, based on the channel information; and obtaining the data by combining the determined common data and the private data.

For example, the common data have been modulated with a first power and the private data with a second power lower than the first power.

In an exemplary implementation, the method comprises demultiplexing the common data and the private data from the received signal, based on the first power and the second power.

According to an exemplary implementation, the private data have been allocated at subcarriers in the frequency domain; the common data have been allocated at affine subcarriers in the affine domain, wherein the affine subcarriers have respective indices determined by a preconfigured factor of the affine waveform; and the received signal includes a pilot signal that has been allocated at one of the affine subcarriers having a first index lower than the preconfigured factor.

According to a further exemplary implementation, the method further comprises: transforming the received signal in a first domain being one of the affine domain or the frequency domain; and estimating the channel information based on the domain transformed signal and: on said pilot signal, when the first domain is the affine domain; OR on multiple frequency domain pilot signals, when the first domain is the frequency domain, wherein multiple frequency domain pilot signals are replica of said pilot signal and are spread in the frequency domain at orthogonal subcarriers determined by the preconfigured factor; and determining, based on the channel information: the common data by decoding them from the domain transformed signal; and the private data by decoding them from a transformed signal obtained by transforming the received signal into one of the affine domain or the frequency domain different from the first domain.

For example, when the wireless channel is single dispersive, the first domain is one of the affine domain or the frequency domain; and when the wireless channel is doubly dispersive, the first domain is the affine domain.

In an exemplary implementation, the received signal includes a guard interval that has been allocated at affine subcarriers whose indices are greater than the first index; and the common data has been allocated at the affine subcarriers whose indices are greater than the indices of the affine subcarriers of the allocated guard interval, wherein the method further comprises: transforming the received signal in the affine domain; and estimating the channel information based on the affine domain-transformed signal and on said pilot signal; and the common data are determined by decoding them, based on the channel information, from the affine domain transformed signal; and the private data are determined by decoding them, based on the channel information, from a frequency-domain transformed signal obtained by transforming the received signal in the frequency domain.

According to an aspect, an apparatus for wireless transmission of data is provided comprising: processing circuitry configured to split the data into common data and private data; and a transceiver configured to transmit, over a wireless channel, the common data using a first waveform being an Affine Frequency Division Multiplexing, AFDM, waveform and the private data using a second waveform being an Orthogonal Frequency Division Multiplexing, OFDM, waveform different from the first waveform.

According to an aspect, an apparatus for wireless reception of data is provided comprising: a transceiver configured to receive, over a wireless channel, a signal including i) common data transmitted using a first waveform being an Affine Frequency Division Multiplexing, AFDM, waveform and ii) private data transmitted using a second waveform being an Orthogonal Frequency Division Multiplexing, OFDM, waveform different from the first waveform; and processing circuitry configured to: obtain channel information of the wireless channel using the first waveform and/or the second waveform; determine the common data and the private data from the received signal, based on the channel information; and obtain the data by combining the determined common data and the private data.

The examples and exemplary implementations described above for the method apply in the same manner to the apparatus for resource allocation. In particular, the processing circuitry may be further configured to perform the steps of one or more of the above-described embodiments, examples, and exemplary implementations.

Still further, a computer program is provided, stored on a non-transitory and computer-readable medium, wherein the computer program includes instructions which when executed on one or more processors perform the steps of the method.

The present disclosure may provide for the following advantages as listed below:
- **Elimination of Successive Interference Cancellation (SIC) that has been used in non-orthogonal multiple access approaches (NOMA, RSMA):** The approach of the present disclosure removes the need for SIC at the receiver, addressing its inherent challenges as follows:
   1. *Error Propagation*: SIC introduces error propagation when inaccuracies occur during the decoding of the common part, affecting the subsequent private streams. The approach of the present disclosure eliminates this issue by separating data using distinct waveform domains (affine for AFDM and frequency for OFDM) and power-level differentiation, enabling accurate decoding without sequential processes.
   2. *Improved Robustness*: SIC relies on highly accurate CSI, which is often compromised in dynamic environments. The dual-waveform approach of the present disclosure ensures reliable decoding even under imperfect CSI conditions, enhancing system robustness.
- **Alignment with NGMA Vision:** As a pioneering Next-Generation Multiple Access (NGMA) technique, the approach of the present disclosure addresses critical challenges in future wireless networks, setting a new benchmark for scalability, efficiency, and performance in 6G and beyond communication systems.
- **Robustness Against Interference and Channel Variability:**
   1. *Affine Domain for Common Data:* By employing AFDM for the common data, the approach of the present disclosure leverages the affine domain's robustness against time-frequency distortions and Doppler effects. This ensures reliable transmission in dynamic environments, where traditional waveforms like OFDM are vulnerable to inter-carrier interference (ICI).
   2. *Power-Level Differentiation:* The distinct power allocation (higher power for common data and lower power for private data) ensures that the signals are easily distinguishable at the receiver, reducing the impact of multi-user interference (MUI).
   3. *Dual-Domain Equalization:* Equalization can be performed in both the affine and frequency domains, compensating for channel imperfections and ensuring accurate decoding.
   4. *Diversity in Channel Estimation:* Channel estimation can be performed in both domains. However, for frequency domain channel estimation, the pilots should be cleaned, so that the channel can be estimated in both domains and this diversity enhances the channel estimation performance.
- **Simplified Receiver Design:**
   1. *No Need for Complex SIC Processing:* The reliance on domain and power separation removes the need for sequential SIC decoding, simplifying the receiver's architecture.
   2. *Enhanced Compatibility:* The approach of the present disclosure supports devices with varying computational capabilities, making it suitable for resource-constrained environments, such as loT (Internet of Things) and massive machine-type communications (MTC).
- **Increased Spectral Efficiency:**
   1. *Optimized Pilot Allocation:* The embedded pilot method of the present disclosure utilizes overlapping resources in the affine domain, maximizing spectral efficiency without compromising decoding accuracy.
   2. *Efficient Resource Utilization:* By dynamically allocating more resources to private data and less to common data, the method optimizes resource usage based on the spreading properties of AFDM and the compact nature of OFDM.
- **Enhanced Decoding Accuracy:**
   1. *Waveform Domain Separation:* The use of AFDM and OFDM for common and private data, respectively, ensures clear separation in their respective domains (affine for common and frequency for private). This eliminates interference between streams (i.e. stream carrying common data and stream carrying private data) and enables precise decoding.
   2. *Power-Based Signal Differentiation:* The higher power allocated to the common data ensures that it dominates in the affine domain, while the lower power of private data remains effective in the frequency domain. This ensures accurate detection of both data streams.
- **Support for Next-Generation Networks (5G and beyond):** The approach of the present disclosure aligns with the requirements of emerging 5G, B5G, and 6G networks:
   1. *Integrated Sensing and Communication (ISAC):* The coexistence of AFDM and OFDM enables dual functionalities, supporting applications that require simultaneous communication and sensing.
   2. *Scalability:* The approach of the present disclosure is scalable to more than two users, making it adaptable for multi-user scenarios in dense network environments.
- **Compatibility with Advanced Waveforms:**
   1. *Coexistence of Waveforms:* The approach of the present disclosure introduces the coexistence of AFDM and OFDM, providing flexibility in waveform design and ensuring compatibility with diverse network requirements.
   2. *Future-Proof Design:* The approach of the present disclosure prepares for the challenges of beyond 5G and 6G networks, where hybrid waveform designs are expected to dominate.
- **Improved Data Rates:**
   1. *Embedded Pilot Method:* By integrating pilots within the affine domain alongside data, the effective data rate of the system increases while maintaining channel estimation accuracy.
   2. *Minimized Overhead:* The clean pilot method minimizes pilot overhead, leaving more resources available for data transmission.
- **Flexibility in Channel Estimation:**
   1. *Dual Pilot Methods:* The clean pilot method of the present disclosure ensures nonoverlapping pilots for precise channel estimation, while the embedded pilot method of the present disclosure maximizes data rate by allowing overlapping resources.
   2. *Adaptability to Dynamic Environments:* Both methods of the present disclosure provide robust channel estimation and equalization.

The present disclosure integrates the Affine Frequency Division Multiplexing (AFDM) and Orthogonal Frequency Division Multiplexing (OFDM) as dual waveforms to address the challenges of multi-user interference (MUI) and simplify receiver operations in next-generation wireless communication systems. By leveraging power-level and different domain separation by transmitting the common part using AFDM waveform at higher power and the private part using OFDM waveform at lower power, the approach of the present disclosure eliminates the need for SIC and enables accurate data decoding across distinct domains: the affine domain for AFDM and the frequency domain for OFDM.

The approach of the present disclosure significantly mitigates error propagation and lowers receiver complexity. Furthermore, the approach dynamically adapts to the characteristics of wireless channels, making it highly suitable for 6G networks and beyond. By proposing such an innovative design, the approach not only enhances the applicability of non-orthogonal multiple access (NOMA and RSMA), but also inherently supports applications requiring integrated sensing and communications (ISAC). As a pioneering Next-Generation Multiple Access (NGMA) technique, the present disclosure establishes a scalable, efficient, and high-performance framework for addressing the stringent requirements of modern and future wireless networks.

Further, although the described methods may be centered around certain radio access technologies and network structures like 4G, LTE, and Wi-Fi, the proposed ideas and their variations can also be extended to other technologies and networks, including Bluetooth, ZigBee, 5G/New Radio (NR), Long-Term Evolution (LTE), LTE-Advanced, LTE-Advanced Pro, Internet of Things (IoT), Industrial IoT (IIoT), and narrowband loT (NB-loT). Therefore, the scope of the present disclosure is not confined to the given examples.

According to some embodiments, the processing circuitry and/or the transceiver is embedded in an integrated circuit, IC.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

## Claims

1. A method for wireless transmission of data comprising steps of:
splitting the data into common data and private data; and
transmitting, over a wireless channel, the common data using a first waveform being an Affine Frequency Division Multiplexing, AFDM, waveform and the private data using a second waveform being an Orthogonal Frequency Division Multiplexing, OFDM, waveform different from the first waveform.

2. The method according to claim 1, wherein the method comprises a step of modulating the common data with a first power and the private data with a second power lower than the first power.

3. The method according to claim 2, wherein the method comprises multiplexing the common data and the private data in power domain in accordance with the first power and the second power.

4. The method according to any of claims 1 to 3, wherein the method further comprises:
allocating the private data at subcarriers in the frequency domain;
allocating the common data at affine subcarriers in the affine domain, wherein the affine subcarriers have respective indices determined by a preconfigured factor of the affine waveform; and
allocating a pilot signal at one of the affine subcarriers having a first index being lower than the preconfigured factor.

5. The method according to any of claims 1 to 4, wherein the method further comprises:
allocating the private data at subcarriers in the frequency domain;
allocating a pilot signal at a first affine subcarrier in the affine domain, the first affine subcarrier having a first index;
allocating a guard interval at affine subcarriers whose indices are greater than the first index; and
allocating the common data at affine subcarriers, whose indices are greater than the indices of the affine subcarriers of the allocated guard interval,
wherein respective indices of the affine subcarriers are determined by a preconfigured factor of the affine waveform.

6. The method according to any of claims 1 to 5, wherein the common data is transmitted by broadcast and the private data is transmitted using multiple antennas.

7. A method for wireless reception of data comprising steps of:
receiving, over a wireless channel, a signal including i) common data transmitted using a first waveform being an Affine Frequency Division Multiplexing, AFDM, waveform and ii) private data transmitted using a second waveform an Orthogonal Frequency Division Multiplexing, OFDM, waveform different from the first waveform;
obtaining channel information of the wireless channel using the first waveform and/or the second waveform;
determining the common data and the private data from the received signal, based on the channel information; and
obtaining the data by combining the determined common data and the private data.

8. The method according to claim 7, wherein the common data have been modulated with a first power and the private data with a second power lower than the first power.

9. The method according to claim 8, wherein the method comprises demultiplexing the common data and the private data from the received signal, based on the first power and the second power.

10. The method according to any of claims 7 to 9, wherein
the private data have been allocated at subcarriers in the frequency domain;
the common data have been allocated at affine subcarriers in the affine domain, wherein the affine subcarriers have respective indices determined by a preconfigured factor of the affine waveform; and
the received signal includes a pilot signal that has been allocated at one of the affine subcarriers having a first index lower than the preconfigured factor.

11. The method according to claim 10, wherein the method further comprises:
transforming the received signal in a first domain being one of the affine domain or the frequency domain; and
estimating the channel information based on the domain transformed signal and:
- on said pilot signal, when the first domain is the affine domain;
OR
- on multiple frequency domain pilot signals, when the first domain is the frequency domain, wherein multiple frequency domain pilot signals are replica of said pilot signal and are spread in the frequency domain at orthogonal subcarriers determined by the preconfigured factor; and
determining, based on the channel information:
- the common data by decoding them from the domain transformed signal; and
- the private data by decoding them from a transformed signal obtained by transforming the received signal into one of the affine domain or the frequency domain different from the first domain.

12. The method according to claim 11, wherein
when the wireless channel is single dispersive, the first domain is one of the affine domain or the frequency domain; and
when the wireless channel is doubly dispersive, the first domain is the affine domain.

13. The method according to claim 10, wherein
the received signal includes a guard interval that has been allocated at affine subcarriers whose indices are greater than the first index;
and the common data has been allocated at the affine subcarriers whose indices are greater than the indices of the affine subcarriers of the allocated guard interval,
wherein the method further comprises:
- transforming the received signal in the affine domain; and
- estimating the channel information based on the affine domain-transformed signal and on said pilot signal; and
the common data are determined by decoding them, based on the channel information, from the affine domain transformed signal; and
the private data are determined by decoding them, based on the channel information, from a frequency-domain transformed signal obtained by transforming the received signal in the frequency domain.

14. An apparatus for wireless transmission of data comprising:
processing circuitry configured to split the data into common data and private data; and
a transceiver configured to transmit, over a wireless channel, the common data using a first waveform being an Affine Frequency Division Multiplexing, AFDM, waveform and the private data using a second waveform being an Orthogonal Frequency Division Multiplexing, OFDM, waveform different from the first waveform.

15. An apparatus for wireless reception of data comprising:
a transceiver configured to receive, over a wireless channel, a signal including i) common data transmitted using a first waveform being an Affine Frequency Division Multiplexing, AFDM, waveform and ii) private data transmitted using a second waveform being an Orthogonal Frequency Division Multiplexing, OFDM, waveform different from the first waveform; and
processing circuitry configured to:
- obtain channel information of the wireless channel using the first waveform and/or the second waveform;
- determine the common data and the private data from the received signal, based on the channel information; and
obtain the data by combining the determined common data and the private data.
